# FASCICULE DE BREVET EUROPEEN

(11) **EP 3 721 962 B1**
(45) Date de publication et mention de la délivrance du brevet: **27.05.2026**
(21) Numéro de dépôt: 20166106.3
(22) Date de dépôt: 27.03.2020
(51) Int. Cl.: C10G 49/22, C10G 49/12, B01J 8/22, B01D 19/00

(54) **RÉACTEUR TRIPHASIQUE AVEC COUPELLE DE RECYCLE DE SECTION DÉCROISSANTE ET D'ANGLE D'INCLINAISON VARIABLE**
DREIPHASENREAKTOR MIT RECYCLINGSCHALE MIT ABNEHMENDEM QUERSCHNITT UND VARIABLEM NEIGUNGSWINKEL
THREE-PHASE REACTOR WITH RECYCLING CUP HAVING A TAPERING CROSS SECTION WITH VARIABLE-TILT ANGLE

(30) Priorité: 12.04.2019 FR 1903945
(43) Date de publication de la demande: 14.10.2020
(73) Titulaire: IFP Energies nouvelles, 92852 Rueil-Malmaison Cedex (FR)
(72) Inventeur: AMBLARD, Benjamin, 92852 RUEIL-MALMAISON CEDEX (FR); MARQUES, Joao, 92852 RUEIL-MALMAISON CEDEX (FR); LE COZ, Jean-François, 92508 RUEIL-MALMAISON CEDEX (FR); LE VOT, Yann, 92508 RUEIL-MALMAISON CEDEX (FR); TOUPANCE, Jean-Philippe, 92508 RUEIL-MALMAISON CEDEX (FR); RODIER, Benjamin, 92508 RUEIL-MALMAISON CEDEX (FR)
(74) Mandataire: IFP Energies nouvelles

(56) Documents cités:
- CN-A- 107 790 073
- CN-B- 101 721 961
- FR-A1- 3 058 421
- US-A- 4 971 678
- US-A- 5 219 532

## Description

### Domaine technique

La présente invention concerne un réacteur triphasique pour la réaction d'une charge d'hydrocarbures avec de l'hydrogène, plus particulièrement l'hydroconversion de charges liquides lourdes d'hydrocarbures tel que réalisé dans le procédé H-OIL^{™}. En particulier, l'invention porte sur un tel réacteur comportant une coupelle de recycle et un dimensionnement de la zone de recycle du liquide optimisés, en vue d'améliorer les performances d'hydroconversion, et notamment d'améliorer la stabilité des effluents liquides produits.

La coupelle de recycle est connue sous le nom de « recycle cup » selon la terminologie anglo-saxonne. Cette coupelle de recycle délimite une zone dans la partie haute du réacteur qui est la zone de recycle du liquide. Dans cette zone est réalisée une séparation gaz /liquide au moyen de la coupelle de recycle qui permet, en association avec une conduite de recycle, la réintroduction de la majorité du liquide sans gaz vers la zone réactionnelle du réacteur, et l'évacuation du gaz avec une minorité de liquide hors du réacteur.

### Technique antérieure

Il est connu des réacteurs triphasiques pour la réaction d'une charge d'hydrocarbures, en particulier d'une charge liquide, avec de l'hydrogène mettant en œuvre un catalyseur en lit bouillonnant et intégrant un système de séparation gaz/liquide en tête de réacteur permettant une recycle du liquide en bas du réacteur pour maintenir en opération le lit bouillonnant.

Par exemple le brevet US4886644 divulgue un réacteur triphasique typique pouvant être utilisé dans un procédé d'hydroconversion d'une charge lourde d'hydrocarbures de type H-OIL^{™}, comportant un dispositif de séparation gaz/liquide pour séparer le gaz du liquide d'un mélange provenant de la zone de réaction catalytique du réacteur. Le schéma de réacteur de la figure 1 est extrait de ce brevet. Sa configuration et son fonctionnement sont décrits plus bas en relation avec l'invention.

La zone de recycle 39 est une zone dépourvue de catalyseur, opérant à une température élevée, généralement comprise entre 300°C et 550°C, dans laquelle peuvent se produire des réactions indésirables de craquage thermique des hydrocarbures, pouvant conduire à des molécules instables ou insolubles favorisant la formation de sédiments. Ces espèces forment alors des particules solides, très visqueuses et/ou collantes composées par des asphaltènes et du coke. La présence excessive de ces produits conduit au cokage et à la désactivation du catalyseur dans le réacteur, à l'encrassement du réacteur et de manière générale des équipements du procédé, et notamment des équipements de séparation et de distillation.

L'invention diffère du réacteur selon le brevet US4886644 par la géométrie de la coupelle de recycle et le dimensionnement de la partie haute du réacteur, permettant notamment d'augmenter la stabilité des effluents liquides produits lors de l'hydroconversion tout en continuant à assurer une bonne séparation gaz/liquide en tête du réacteur pour une recycle de liquide dépourvu au maximum de gaz en bas du réacteur, à destination de la zone de réaction catalytique.

CN 107790073 A, CN 101721961 B, US 5219532, FR 3058421 A1 et US 4971678 décrivent des réacteurs d'hydroconversion de charges hydrocarbonées avec un dispositif de séparation gaz/liquide comprenant en tête de réacteur une coupelle de recycle de liquide.

### Objectifs et Résumé de l'invention

La présente invention vise de manière générale à fournir un dispositif de séparation gaz/liquide implanté dans les réacteurs triphasiques tels que ceux utilisés dans les procédés d'hydroconversion de fractions lourdes d'hydrocarbures de type H-OIL^{™}, qui a classiquement pour rôle la réintroduction de la majorité du liquide sans gaz vers la zone réactionnelle, et l'évacuation du gaz et du reste de liquide hors du réacteur, permettant d'améliorer les performances du procédé d'hydroconversion, notamment de réduire la formation de sédiments, et donc augmenter la stabilité des effluents liquides en vue d'une meilleure opérabilité du procédé.

Ainsi, pour atteindre au moins l'un des objectifs susvisés, parmi d'autres, la présente invention propose, selon un premier aspect, un réacteur triphasique pour la réaction d'une charge d'hydrocarbures avec de l'hydrogène, comprenant :
- une enceinte allongée et disposée verticalement comportant des extrémités supérieure et inférieure et une paroi latérale, ladite enceinte comprenant une zone de réaction catalytique adjacente à l'extrémité inférieure et adaptée à la réaction de la charge d'hydrocarbures et d'un gaz en présence d'un catalyseur en lit bouillonnant, et une zone de recycle d'un liquide adjacente à l'extrémité supérieure,
- un dispositif de séparation gaz/liquide configuré pour séparer une phase gazeuse et une phase liquide d'un mélange provenant de ladite zone de réaction catalytique, et comprenant au moins :
   -- une coupelle de recycle comportant une partie supérieure cylindrique prolongée par une partie inférieure munie de conduits verticaux pour le passage dudit mélange à travers la coupelle de recycle, ladite partie inférieure ayant une section décroissante et un angle d'inclinaison β variable par rapport à l'axe de révolution (Z) de ladite partie supérieure cylindrique, ladite coupelle de recycle étant positionnée au-dessus de de la zone de réaction catalytique et délimitant avec au moins l'extrémité supérieure de l'enceinte la zone de recycle,
   -- une conduite de recycle du liquide située à l'apex de ladite partie inférieure et en communication fluidique avec l'extrémité inférieure de l'enceinte par des moyens de recirculation,
ladite section décroissante de ladite partie inférieure étant une section transversale, c'est-à-dire orthogonale par rapport l'axe de révolution (Z), qui décroît en direction de ladite conduite de recycle, et ledit angle d'inclinaison β variable étant un angle formé entre la tangente en un point de ladite partie inférieure et un axe parallèle à l'axe de révolution (Z) passant par ce point, ledit angle d'inclinaison β n'étant pas constant sur toute la hauteur de ladite partie inférieure, excluant une partie inférieure conique ou tronconique.

Selon un mode de réalisation, la partie inférieure à section décroissante et d'angle d'inclinaison variable comprend une portion bombée, de préférence de section elliptique.

Selon un mode de réalisation, la partie inférieure à section décroissante et d'angle d'inclinaison variable est une portion bombée de hauteur L₂ ayant un rapport L₂/L₁ compris entre 0,01 et 0,7, de préférence compris entre 0,02 et 0,6, et plus préférentiellement compris entre 0,1 et 0,5, L₁ étant le diamètre de la partie supérieure cylindrique de la coupelle de recycle.

Selon un mode de réalisation, la partie inférieure à section décroissante et d'angle d'inclinaison variable comporte en outre au moins une portion tronconique, de préférence surmontée par ladite portion bombée.

Selon un mode de réalisation, la portion bombée de la partie inférieure à section décroissante et d'angle d'inclinaison variable a un rapport L_{2b}/L_{1b} compris entre 0,01 et 0,7, de préférence compris entre 0,02 et 0,6, et plus préférentiellement compris entre 0,1 et 0,5, L_{2b} étant la hauteur de la portion bombée et L_{1b} étant le plus grand diamètre de ladite partie inférieure à section décroissante et d'angle d'inclinaison variable.

Selon un mode de réalisation, la partie inférieure à section décroissante et d'angle d'inclinaison variable comprend une succession de portions tronconiques, chacune desdites portions tronconiques ayant de préférence un angle d'inclinaison β croissant en direction de la conduite de recycle.

Selon un mode de réalisation, la partie inférieure à section décroissante et d'angle d'inclinaison variable comprend une restriction elliptique inversée entre la partie supérieure cylindrique et la conduite de recycle, le rapport L₂/L₃ de la restriction elliptique étant de préférence compris entre 0,01 et 0,7, de préférence compris entre 0,02 et 0,6, et plus préférentiellement compris entre 0,1 et 0,5, L₂ étant la distance verticale entre le bas de la partie supérieure cylindrique et la partie supérieure de la conduite et L₃ étant la distance horizontale entre la partie supérieure cylindrique et la paroi extérieure de la conduite.

Selon un mode de réalisation, la conduite de recycle est positionnée au centre de la coupelle de recycle, ladite coupelle de recycle étant de préférence centrée dans le réacteur.

Selon un mode de réalisation, l'extrémité supérieure de l'enceinte a une forme convexe et a un rapport L₅/D₁ compris entre 0,01 et 20, de préférence compris entre 0,02 et 10, et plus préférentiellement compris entre 0,1 et 5, L₅ étant la hauteur de l'extrémité supérieure de l'enceinte et D₁ étant le diamètre de l'enceinte du réacteur dans la zone de recycle.

Selon un mode de réalisation, la partie supérieure cylindrique de la coupelle de recycle est formée par la paroi latérale de l'enceinte.

Selon un mode de réalisation, un espace annulaire est formé entre la partie supérieure cylindrique de la coupelle de recycle et la paroi latérale de l'enceinte.

Selon un mode de réalisation, l'espace annulaire a une largeur comprise entre 0,01 et D₁/3 m.

Selon un mode de réalisation, la hauteur L₆ de la partie supérieure cylindrique est comprise entre 0,01xD₁ et 2xD₁.

Selon un mode de réalisation, la distance L₇ entre le sommet de la partie supérieure cylindrique de la coupelle de recycle et le bas de l'extrémité supérieure de l'enceinte est compris entre 0,001xD₁ et 2xD₁.

Selon un mode de réalisation, le diamètre D₂ de la conduite de recycle est compris entre 0,1 m et 3 m

Selon un mode de réalisation, le diamètre D₁ de l'enceinte du réacteur est compris entre 0,1 et 30 m, de préférence entre 0,5 m et 20 m, et de manière très préférée entre 1 m et 10 m.

Selon un deuxième aspect, la présente invention propose un procédé d'hydroconversion d'une charge d'hydrocarbures comportant un réacteur selon l'invention.

Selon une mise en œuvre, le procédé est un procédé d'hydroconversion d'une charge liquide d'hydrocarbures dans lequel :
- on introduit de l'hydrogène et la charge liquide d'hydrocarbures dans l'extrémité inférieure de l'enceinte du réacteur selon un flux ascendant suffisant pour produire un mouvement aléatoire d'un catalyseur sous forme de particules dans la zone de réaction catalytique ;
- on maintient le catalyseur en lit bouillonnant dans la zone de réaction catalytique avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle, pour réaliser les réactions d'hydroconversion de ladite charge d'hydrocarbures ;
- on sépare une phase gaz d'une phase liquide d'un mélange provenant de la zone de réaction catalytique et envoyé dans les conduits de la coupelle de recycle, une partie du liquide ainsi séparé constituant le liquide recyclé envoyé dans l'extrémité inférieure de l'enceinte du réacteur ; et
- on évacue du réacteur le gaz et l'autre partie du liquide séparé présents dans la zone de recycle.

Les conditions opératoires du réacteur peuvent être les suivantes :
- une pression absolue comprise entre 2 et 35 MPa, de préférence entre 5 et 25 MPa, et de manière encore préférée, entre 6 et 20 MPa, et
- une température comprise entre 300°C et 550°C, de préférence comprise entre 350 et 500°C, plus préférentiellement comprise entre 370 et 460°C, et encore plus préférentiellement se situant entre 380°C et 440°C.

De préférence, la charge est une charge liquide lourde d'hydrocarbures, comportant une fraction d'au moins 50% poids ayant une température d'ébullition d'au moins 300°C, et contenant du soufre, du carbone Conradson, des métaux, et de l'azote.

Selon une mise en œuvre, le procédé est un procédé d'hydroconversion d'une charge solide d'hydrocarbures, de préférence du charbon, dans lequel :
- on introduit de l'hydrogène et un mélange de la charge solide d'hydrocarbures et d'une charge liquide d'hydrocarbures dans l'extrémité inférieure de l'enceinte du réacteur selon un flux ascendant suffisant pour produire un mouvement aléatoire d'un catalyseur sous forme de particules dans la zone de réaction catalytique ;
- on maintient le catalyseur en lit bouillonnant dans la zone de réaction catalytique avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle, pour réaliser les réactions d'hydroconversion de la charge solide d'hydrocarbures ;

- on sépare une phase gaz d'une phase liquide d'un mélange provenant de la zone de réaction catalytique et envoyé dans les conduits de la coupelle de recycle, une partie du liquide ainsi séparé constituant le liquide recyclé envoyé dans l'extrémité inférieure de l'enceinte du réacteur ; et
- on évacue du réacteur au moins le gaz et l'autre partie du liquide séparé présents dans la zone de recycle.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

### Liste des figures

La figure 1 est un schéma représentatif, en coupe, d'un réacteur triphasique.
La figure 2 est un schéma représentatif, en coupe, de la partie sommitale du réacteur selon l'invention représenté à la figure 1 en coupe, illustrant le dispositif de séparation gaz/liquide et sa coupelle de recycle selon un premier mode de réalisation de l'invention.
La figure 3 est un schéma représentatif, en coupe, de la partie sommitale du réacteur selon l'invention représenté à la figure 1, illustrant le dispositif de séparation gaz/liquide et sa coupelle de recycle selon un deuxième mode de réalisation de l'invention.
La figure 4 est un schéma représentatif, en coupe, de la partie sommitale du réacteur selon l'invention représenté à la figure 1 illustrant le dispositif de séparation gaz/liquide et sa coupelle de recycle selon un troisième mode de réalisation de l'invention.
La figure 5 est un schéma représentatif, en coupe, de la partie sommitale du réacteur selon l'invention représenté à la figure 1, illustrant le dispositif de séparation gaz/liquide et sa coupelle de recycle selon un quatrième mode de réalisation de l'invention..

Sur les figures, les mêmes références désignent des éléments identiques ou analogues.

### Description des modes de réalisation

L'objet de l'invention est de proposer un réacteur triphasique pour la réaction d'une charge d'hydrocarbures avec de l'hydrogène et un procédé d'hydroconversion d'une telle charge lourde d'hydrocarbures mettant en œuvre un tel réacteur en vue d'obtenir de manière générale des produits hydrocarbonés stables plus légers et débarrassés de leur impuretés (soufre, métaux, asphaltènes etc.). De préférence la charge d'hydrocarbures est une charge liquide d'hydrocarbures, et plus préférentiellement une charge liquide lourde d'hydrocarbures.

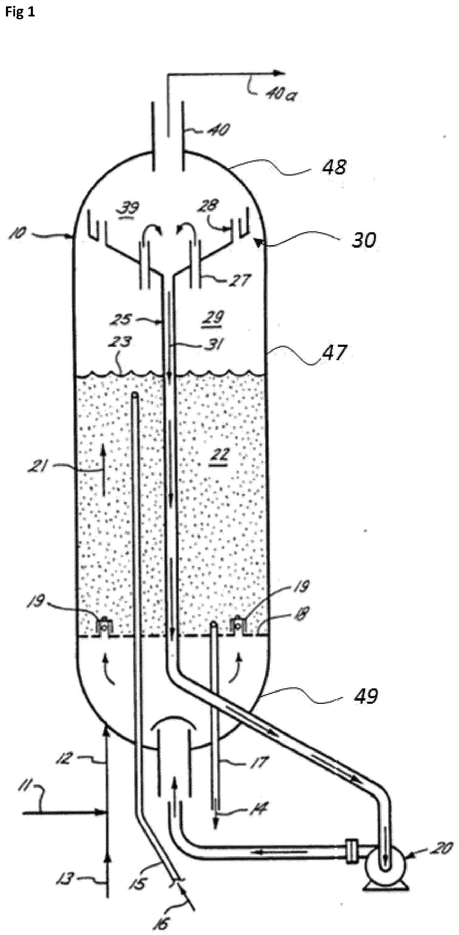

La figure 1 est un schéma représentatif montrant les principaux éléments d'un réacteur triphasique.

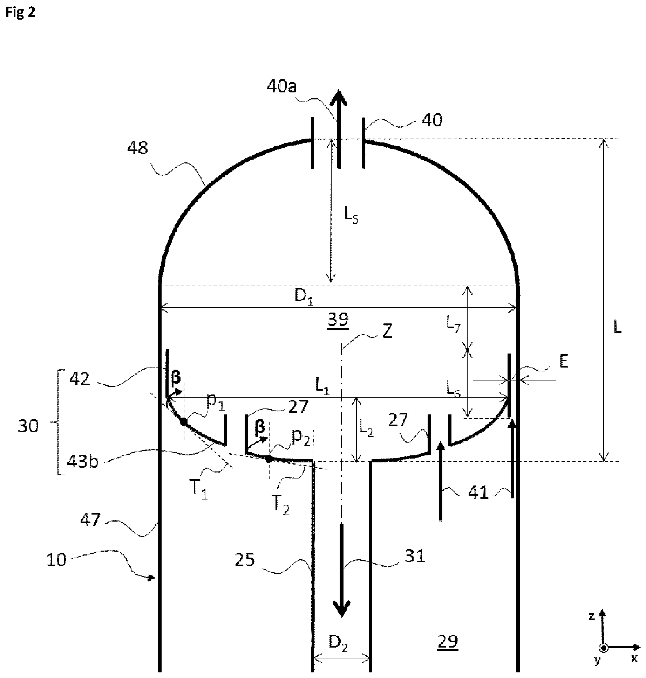

La constitution et le fonctionnement d'un réacteur triphasique fonctionnant en lit bouillonnant, tel que représenté, et par exemple utilisé dans les procédés H-Oil^{™}, sont connus. Le réacteur selon l'invention se distingue des réacteurs connus par l'implantation d'une coupelle de recycle spécifique dans la zone de recycle décrite plus en détails en relation avec les figures 2 à 5. Selon l'invention le réacteur comprend une enceinte 10 allongée et disposée verticalement comportant des extrémités supérieure 48 et inférieure 49 et une paroi latérale 47, ladite enceinte comprenant une zone de réaction catalytique 22 adjacente à l'extrémité inférieure 49 et adaptée à la réaction de la charge liquide d'hydrocarbures et d'un gaz en présence d'un catalyseur en lit bouillonnant (catalyseur supporté), et une zone de recycle du liquide 39 adjacente à l'extrémité supérieure 48. L'enceinte du réacteur est de préférence cylindrique.

Le réacteur comporte également un dispositif de séparation gaz/liquide configuré pour séparer une phase gazeuse et une phase liquide d'un mélange provenant de la zone de réaction catalytique 22. Ce dispositif de séparation gaz/liquide comprend au moins :
-- une coupelle de recycle 30 comportant une partie supérieure cylindrique 42 prolongée par une partie inférieure (43a, 43b, 43c, 43d) munie de conduits verticaux 27 pour le passage dudit mélange à travers la coupelle de recycle, ladite partie inférieure a une section décroissante et un angle d'inclinaison β variable par rapport à l'axe de révolution (Z) de ladite partie supérieure cylindrique 42, ladite coupelle de recycle 30 étant positionnée au-dessus de de la zone de réaction catalytique 22 et délimitant avec au moins l'extrémité supérieure 48 de l'enceinte la zone de recycle 39,
-- une conduite de recycle 25 du liquide située à l'apex de ladite partie inférieure et en communication fluidique avec l'extrémité inférieure 49 de l'enceinte par des moyens de recirculation.

Dans la présente description, on entend par cylindre un cylindre de révolution.

Par section décroissante de ladite partie inférieure (43a, 43b, 43c, 43d), on entend une section transversale, c'est-à-dire orthogonale par rapport l'axe Z (axe de révolution) de la partie supérieure cylindrique 42 (qui est confondu avec la verticale z), qui décroît dans le sens d'écoulement (descendant) du liquide hydrocarboné, c'est-à-dire en direction de la conduite de recycle 25.

Par angle d'inclinaison β variable, on entend que l'angle β n'est pas constant sur toute la hauteur de la partie inférieure, ce qui exclut notamment une partie inférieure conique ou tronconique (formé par un seul cône). L'angle d'inclinaison β, illustré aux figures 2 à 5, et décrit plus loin, est l'angle formé entre la tangente en un point de la partie inférieure et un axe parallèle à l'axe Z passant par ce point.

Cette partie inférieure peut être une partie bombée, connue par l'homme du métier en tant que « fond bombé » comme par exemple décrit dans les documents normatifs NF E 81-100, NF E 81-101 (fonds bombés à petit rayon de carré PRC - rayon de bombage supérieur ou égal au diamètre extérieur du fond et un rayon de carre compris entre 30 et 500 mm suivant les diamètres), NF E 81-102 (fonds bombés à grand rayon de carré GRC - rayon de bombage égal au diamètre extérieur du fond et un rayon de carre égal au dixième de ce même diamètre), NF E 81-103 (fonds bombés elliptiques), NF E 81-104 (fonds bombés à moyen rayon de carré MRC - rayon de bombage égal au diamètre extérieur du fond et un rayon de carre compris entre le trentième et le quinzième de ce même diamètre), ou être une partie comportant une portion bombée et au moins une portion tronconique, ou encore être une partie comportant une succession de portions tronconiques, comme décrit plus en détails ci-dessous en relation avec les figures 2 à 5. De telles formes sont bien connues de l'homme du métier et facilitent l'écoulement du liquide vers la conduite de recycle. En outre, de telles formes permettent une configuration compacte de la coupelle de recycle, permettant d'avoir un volume de la zone de recycle 39 plus petit et un éventuellement un volume catalytique plus grand.

Les parties supérieure 42 et inférieure (43a, 43b, 43c, 43d) sont dans la continuité l'une de l'autre, autrement dit elles sont successives, et la conduite de recycle 25 comporte une ouverture positionnée dans le fond de la partie inférieure.

Dans la présente description, on entend par cylindre on entend un cylindre de révolution.

Ce réacteur est conçu d'une manière spécifique avec des matériaux appropriés lui permettant de traiter des liquides réactifs, des « slurry » liquide-solide, (c'est-à-dire des liquides contenant de fines particules solides dispersées en son sein), des solides et des gaz à température et pression élevées avec une application préférée pour le traitement de coupes hydrocarbures liquides avec de l'hydrogène à haute température et haute pression, c'est-à-dire à une pression absolue comprise entre 2 MPa et 35 MPa, de préférence entre 5 MPa et 25 MPa, et de manière encore préférée, entre 6 et 20 MPa, et à une température comprise entre 300°C et 550°C, de préférence comprise entre 350°C et 500°C, et d'une manière encore préférée comprise entre 370°C et 460°C, la plage de température privilégiée se situant entre 380°C et 440°C.

Le réacteur est conçu avec un conduit d'entrée approprié 12 pour l'injection d'une charge hydrocarbonée lourde 11 et d'un gaz 13 contenant de l'hydrogène. Ce conduit d'entrée est situé dans la partie inférieure du réacteur, qu'on désigne par extrémité inférieure 49 de l'enceinte 10 du réacteur. Les conduits de sortie sont positionnés dans la partie supérieure du réacteur, qu'on désigne par extrémité supérieure 48 de l'enceinte 10 du réacteur. Un conduit de sortie 40 est conçu pour soutirer des vapeurs pouvant contenir une certaine quantité de liquide. Le réacteur contient aussi un système permettant l'introduction et le soutirage de particules de catalyseur montré schématiquement par le conduit 15 pour l'introduction du catalyseur frais 16, et le conduit 17 pour le soutirage du catalyseur usé 14.

La charge lourde d'hydrocarbures est introduite à travers le conduit 11, pendant que le gaz contenant l'hydrogène est introduit à travers le conduit 13. Le mélange charge et hydrogène gazeux est ensuite introduit dans l'enceinte 10 du réacteur à travers le conduit 12 dans l'extrémité inférieure 49 de l'enceinte du réacteur.

Les fluides entrant passent à travers un plateau de distribution 18, e.g. une grille, contenant des distributeurs appropriés.

Dans ce schéma, des distributeurs de type « bubble cap » 19 sont montrés, mais il est entendu que tout distributeur connu de l'homme du métier permettant de distribuer les fluides provenant du conduit 12 sur toute la section de l'enceinte 10 du réacteur, et ceci de la manière la plus homogène possible, peut être utilisé.

Le mélange liquide/gaz s'écoule vers le haut et les particules de catalyseur sont entraînées dans un mouvement de lit bouillonnant par l'écoulement gaz et l'écoulement liquide induit par des moyens de recirculation, e.g. la pompe de recirculation 20, aussi appelée pompe d'ébullition (connue en anglais sous le nom de « ebullation pump »), qui peut être interne ou externe à l'enceinte 10 du réacteur.

L'écoulement ascendant de liquide délivré par la pompe 20 est suffisant pour que la masse de catalyseur dans la zone de réaction ou lit catalytique 22 s'expanse d'au moins 10% en volume, de préférence de 10 % à 100 % en volume et plus préférentiellement de 20% à 100% en volume par rapport au volume statique (c'est-à-dire au repos) du lit de catalyseur, permettant ainsi l'écoulement de gaz et liquide à travers l'enceinte 10 du réacteur, comme montré par les flèches de direction 21.

A cause de l'équilibre entre les forces de friction engendrées par l'écoulement ascendant du liquide et du gaz, et les forces gravitaires dirigées vers le bas, le lit de particules de catalyseur atteint un niveau haut d'expansion pendant que le liquide et le gaz plus légers continuent de se diriger vers le haut de l'enceinte 10 du réacteur au-delà de ce niveau solide. Dans le schéma, le niveau d'expansion maximale du catalyseur correspond à l'interface 23. Au-dessous de cet interface 23 se trouve la zone de réaction catalytique 22 qui s'étend donc du plateau de distribution 18 jusqu'au niveau 23.

Au-dessus de l'interface 23 se trouve une zone 29 appauvrie en catalyseur (comparativement à la zone 22) et ne contenant quasiment que du gaz et du liquide. Le gaz comprend notamment l'hydrogène introduit par le conduit 13 et d'autres composés gazeux contenus initialement dans la charge ou formés par les réactions dans le réacteur. Les particules de catalyseur dans la zone de réaction 22 sont en mouvement aléatoire à l'état fluidisé, raison pour laquelle la zone réactionnelle 22 est aussi qualifiée de zone fluidisée triphasique.

La zone 29, à faible concentration de catalyseur au-dessus du niveau 23, est remplie de liquide et de gaz entrainé. Le gaz est séparé du liquide dans la partie supérieure du réacteur, dans la zone de recycle 39, adjacente à l'extrémité supérieure 48 de l'enceinte 10 du réacteur, zone 39 dans laquelle est implanté une coupelle de recycle 30, aussi communément appelée « recycle cup » en anglais, afin de collecter et recycler la majeure partie du liquide à travers la conduite centrale de recycle 25. Il est important que le liquide recyclé à travers la conduite de recycle 25 contienne le moins de gaz possible, voire pas de gaz du tout, pour éviter le phénomène de cavitation de la pompe 20.

Le conduit 40 est utilisé pour le soutirage du gaz et d'une partie du liquide.

La coupelle de recycle 30, correspondant à une partie élargie à l'extrémité supérieure de la conduite de recycle 25, délimite, avec l'extrémité supérieure 48, la zone de recycle 39. La zone de recycle 39 comportant elle-même une zone supérieure contenant majoritairement le gaz séparé et une zone inférieure contenant majoritairement le liquide recyclé, séparée par un niveau non représenté. Une pluralité d'éléments de séparation (27,28) orientés verticalement et portés par la coupelle de recycle 30 créent le lien fluidique entre la zone gaz/liquide appauvrie en catalyseur 29 et la zone de recycle 39.

Le mélange gaz/liquide s'écoule vers le haut à travers les conduits des éléments de séparation 27 et 28. Une partie du liquide séparé est ensuite dirigée vers la pompe de recyclage 20 dans la direction de la flèche 31 à travers la conduite centrale de recycle 25, et est donc recyclée vers l'extrémité inférieure 49 de l'enceinte 10 du réacteur en-dessous de la grille 18.

Le gaz séparé du liquide, s'écoule vers le sommet de l'extrémité supérieure 48 de l'enceinte 10 du réacteur, et est soutiré par le conduit supérieur 40. Le gaz soutiré est ensuite traité d'une manière conventionnelle pour récupérer autant d'hydrogène que possible afin que ce dernier soit recyclé dans l'enceinte 10 du réacteur à travers le conduit 13.

La présente invention n'exclut pas le traitement et/ou la conversion d'une charge solide d'hydrocarbures, e.g. du charbon, dans le réacteur en présence d'un liquide, qui est une charge liquide d'hydrocarbures, e.g. un distillat sous vide (« vacuum gas oil » ou VGO en anglais) introduite dans le réacteur avec la charge solide et le liquide produit dans le réacteur par réaction de la charge solide avec de l'hydrogène. Un tel procédé connu mettant en œuvre un réacteur triphasique comportant un lit bouillonnant catalytique est le procédé « H-Coal », par exemple le procédé H-Coal _{TS} ^{™} (TS pour « two stage ») mettant en œuvre deux réacteurs triphasiques à lit bouillonnant successifs tel que décrit dans le brevet US4874506, fonctionnant de manière similaire au procédé H-Oil^{™} mais adapté à la conversion de charbon en produits hydrocarbonés stables plus légers et débarrassés de leurs impuretés pour la production de carburants. Dans ce cas, ce qui est introduit dans le réacteur triphasique est un mélange de charge solide, e.g. du charbon, et un charge liquide, formant une suspension (ou « slurry » en anglais). La phase liquide séparée de la phase gaz dans le dispositif de séparation gaz/liquide du réacteur, et la recycle de liquide séparé par la coupelle de recycle et la conduite de recycle correspondent au liquide produit dans le réacteur par la conversion du charbon et à la charge liquide d'hydrocarbures liquide introduite avec le charbon.

L'organisation générale de la circulation des fluides n'est pas modifié dans la présente invention par rapport à l'art antérieur tel qu'il vient d'être décrit. Seule est modifiée la géométrie de la coupelle de recycle 30 et le dimensionnement de la zone de recycle 39 comme cela est décrit ci-après, en relation avec les figures 2 à 5, illustrant quatre mode de réalisation différents.

Selon l'invention, la géométrie de la coupelle de recycle et le dimensionnement de la partie haute du réacteur permettent d'augmenter le volume catalytique et de diminuer les zones thermiques non catalytiques de formation de sédiments. En conséquence, la stabilité des effluents liquides produits lors de l'hydroconversion est améliorée tout en continuant à assurer une bonne séparation gaz/liquide en tête du réacteur pour une recycle de liquide dépourvu au maximum de gaz en bas du réacteur, à destination de la zone de réaction catalytique.

La figure 2 est un schéma plus précis de la zone de recycle 39 du réacteur représenté à la figure 1. En particulier, ce schéma illustre la géométrie et le fonctionnement d'un réacteur selon l'invention et son dispositif de séparation gaz/liquide comportant la coupelle de recycle 30 et la conduite de recycle 25 du liquide séparé, en tête du réacteur, selon un premier mode de réalisation. La figure 2 fait apparaître les dimensions géométriques importantes pour le dimensionnement dudit dispositif et de la zone de recycle 39.

La zone de recycle du liquide 39 est adjacente à l'extrémité supérieure 48 de l'enceinte 10 du réacteur, et comprend au moins en partie le dispositif de séparation gaz/liquide configuré pour séparer une phase gazeuse et une phase liquide du mélange provenant de la zone de réaction catalytique 22.

Le dispositif de séparation gaz/liquide comprend notamment une coupelle de recycle 30 comportant une partie supérieure cylindrique 42 prolongée par une partie inférieure bombée 43a, et une conduite de recycle 25 du liquide, située au point le plus bas de la partie inférieure 43 et en communication fluidique avec l'extrémité inférieure 49 de l'enceinte par des moyens de recirculation.

La partie inférieure bombée 43a a une section décroissante et un angle d'inclinaison β variable par rapport à l'axe de révolution (Z) de la partie supérieure cylindrique, axe de révolution confondu avec la verticale (z) en position de fonctionnement de l'enceinte 10. L'angle d'inclinaison β est l'angle formé entre la tangente en un point de la partie inférieure 43a et un axe parallèle à l'axe de révolution Z passant par ce point (la verticale). L'angle β varie de préférence entre 0° et 180°. L'angle β croît de préférence dans le sens d'écoulement (descendant) du liquide, soit en direction de la conduite de recycle 25. Ainsi, sur la figure 2, la valeur de l'angle β au point p₁, formé entre la tangente T₁ et la verticale, est différent de la valeur de l'angle β au point p₂ formé entre la tangente T₂ et la verticale, et est en l'occurrence plus petit. La partie inférieure bombée peut être caractérisée par le rapport L₂/ L₁, L₂ étant la hauteur du fond bombé, et L₁ étant le diamètre de la partie supérieure cylindrique 42. La partie inférieure bombée peut être d'un type décrit selon les normes référencées déjà citées plus haut, et notamment caractérisé par un rayon de bombage Ri et un rayon de carré Rc. De préférence, la partie inférieure bombée de la coupelle de recycle 30 est un fond bombé elliptique (par exemple tel que défini dans le document normatif NF E 81-103). De préférence la partie inférieure bombée a un rapport L₂/L₁ compris entre 0,01 et 0,7, de préférence compris entre 0,02 et 0,6, et plus préférentiellement compris entre 0,1 et 0,5, L₁ étant le diamètre de la partie supérieure cylindrique 42 de la coupelle de recycle. Par exemple le rapport L₂/L₁ est égal à 0,25.

Cette géométrie avec une section décroissante et un angle d'inclinaison β variable de la partie inférieure permet d'avoir un rapport volume catalytique/volume thermique plus important par rapport aux réacteurs connus comportant des coupelles de recycle classiques, pour un même catalyseur et à iso expansion, i.e. même taux d'expansion du catalyseur, résultant notamment en des bénéfices en termes de stabilité des effluents produits lors de l'hydroconversion de charges lourdes et en termes de performances générales du procédé d'hydroconversion. Par volume thermique on entend les zones du réacteur hors zone catalytique en lit bouillonnant 22 (zones 39, 29, conduite 25, partie inférieure 49). Le volume thermique ne comprend pas de catalyseur supporté hormis des fines. Par volume catalytique on entend la zone de réaction catalytique en lit bouillonnant 22. Un volume thermique réduit permet notamment d'éviter le craquage thermique avec la formation des précurseurs d'encrassement (espèces très visqueuses et/ou collantes composées par des asphaltènes et du coke), qui ne sont pas désirés dans un procédé d'hydroconversion, et un volume catalytique augmenté permet en particulier des performances catalytiques d'hydrotraitement plus importantes et une stabilisation des précurseurs d'encrassement.

La coupelle de recycle 30 est positionnée au-dessus de la zone de réaction catalytique 22, et plus particulièrement au-dessus de la zone 29 elle-même surmontant la zone de réaction catalytique 22, et délimite, avec au moins l'extrémité supérieure 48 de l'enceinte, la zone de recycle 39. La zone de recycle a une hauteur L qui peut être définie comme étant la distance entre le sommet de la conduite de recycle 25 et le sommet de l'extrémité supérieure 48, tel que représenté à la figure 2.

Selon ce premier mode de réalisation, la partie inférieure bombée 43a est concave (en creux).

La partie inférieure 43a est munie des conduits verticaux 27 pour le passage du mélange gaz/liquide à travers la coupelle de recycle, déjà décrits plus haut en relation avec la figure 1. Ces éléments de passage et de séparation gaz/liquide peuvent être de simples conduits verticaux traversant la paroi de la partie inférieure 43a, tel que représenté, mais peuvent également être tout autre élément de passage et de séparation gaz/liquide tel que décrit dans les demandes de brevets FR3058420A1 et FR3058421A1.

En particulier, à l'instar de ce qui est décrit dans la demande FR3058420A1, la partie inférieure 43a peut être munie d'une pluralité d'éléments de séparation 27 verticaux fonctionnant en parallèle, chaque élément de séparation 27 possédant un conduit d'admission du mélange gaz liquide ouvert sur la surface de la partie 43a et s'élevant jusqu'à une hauteur donnée à l'intérieur de la zone de recycle 39, et se terminant par une succession de deux coudes; un premier coude situé dans le plan (ZY) défini par l'axe Z sensiblement vertical, et un axe Y appartenant au plan (XY) perpendiculaire à l'axe Z, et un second coude situé dans le plan (XY), l'axe X étant lui-même perpendiculaire à l'axe Y. De préférence, l'angle d'orientation du premier coude dans le plan (ZY), l'angle d'orientation du second coude dans le plan (XY) et la distance séparant deux coudes successifs ont des valeurs spécifique : le premier coude dans le plan (YZ) peut avoir son orientation définie par son angle α₁ compris entre 45° et 315°, de préférence entre 60° et 300°, et de manière préférée entre 80° et 200°, et le second coude situé dans le plan (XY), peut avoir son orientation définie par son angle γ₁ compris entre 0° et 135°, de préférence entre 10° et 110°, et de manière préférée entre 30° et 100°, les deux coudes successifs étant séparés d'une distance comprise entre la moitié du diamètre du conduit d'admission et 4 fois le diamètre du conduit d'admission.

Alternativement, à l'instar de ce qui est décrit dans la demande FR3058421A1, la partie inférieure 43a peut être munie d'une pluralité d'éléments de séparation 27 verticaux fonctionnant en parallèle, chaque élément de séparation 27 possédant un conduit d'admission du mélange gaz liquide ouvert sur la surface de la partie 43a et s'élevant jusqu'à une hauteur donnée à l'intérieur de la zone de recycle 39, et étant coiffé d'une calotte supérieure munie d'un conduit d'évacuation du gaz situé en partie supérieure de ladite calotte, et d'un élément tubulaire sensiblement coaxial au conduit d'admission et permettant le retour du liquide, chaque élément 27 étant équipé d'une spirale hélicoïdale située à l'intérieur du conduit d'admission dans la partie supérieure des éléments 27. De préférence la spirale hélicoïdale forme un angle γ₁ avec l'horizontale compris entre 10° et 80°, de préférence entre 20° et 70°, et de manière préférée entre 35° et 60°, et cette spirale hélicoïdale effectue de préférence sur l'ensemble de sa hauteur un nombre de rotations compris entre 0,5 et 4, chaque rotation correspondant à 1 tour à 360°, et de préférence entre 0,5 et 2 tours à 360°.

La partie inférieure 43a de la coupelle de recycle peut également comporter d'autres types d'éléments de passage et de séparation gaz/liquide connus.

Selon un mode de réalisation, un espace annulaire E est formé entre la partie supérieure cylindrique de la coupelle de recycle et la paroi latérale de l'enceinte. Cet espace constitue alors un passage pour le mélange gaz/liquide l'instar des conduits 27, et peut ainsi participer à la séparation gaz/liquide. La largeur de cet espace annulaire, définie perpendiculairement à la paroi latérale de l'enceinte et à la partie supérieure cylindrique de la coupelle de recycle, est de préférence compris entre 0,01 m et D₁/3 m, plus préférentiellement compris entre 0,01 m et D₁/4, et de manière encore plus préférée compris entre 0,01 m et D₁/8.

Selon un mode de réalisation, la partie supérieure cylindrique de la coupelle de recycle est formée par la paroi latérale de l'enceinte. Il s'agit d'une configuration où la coupelle s'étend sur toute la section de l'enceinte, sans espace annulaire E entre la coupelle et la paroi latérale de l'enceinte du réacteur. Selon ce mode de réalisation, le mélange gaz/liquide entre dans la zone de recycle à travers la coupelle de recycle uniquement par les conduits 27. Dans ce cas, les vitesses gaz et liquide sont plus importantes et la séparation gaz/liquide dans les éléments 27 décrits précédemment est améliorée.

Le diamètre L₁ de la partie supérieure cylindrique 42 de la coupelle de recycle résulte directement du diamètre D₁ de l'enceinte du réacteur et de la longueur de l'espace annulaire E. Ainsi, lorsqu'un tel espace annulaire E existe, le diamètre L₁ de la partie supérieure cylindrique 42 de la coupelle de recycle est égal à la différence entre le diamètre D₁ de l'enceinte du réacteur et deux fois la largeur de l'espace annulaire E. L₁ est ainsi de préférence compris entre 1,1xD₂ et D₁-2x0,01 m, plus préférentiellement compris entre 1,5xD₂ et D₁-2x0,01m, et de manière encore plus préférée compris entre 2xD₂ et D₁-2x0,01, D₂ étant le diamètre de la conduite de recycle 25.

A titre indicatif, et sans être limitatif, le diamètre D₁ peut être compris entre 0,1 m et 30 m, de préférence entre 0,5 m et 20 m, et de manière très préférée entre 1 m et 10 m.

La hauteur L₆ de la partie supérieure cylindrique 42 est de préférence comprise entre 0,001xD₁ et 2xD₁, plus préférentiellement comprise entre 0,1x D₁ et D₁, et de manière plus préférée comprise entre 0,15x D₁ et 0,9x D₁.

La distance L₇ définie entre le sommet de la partie supérieure cylindrique 42 et le bas de l'extrémité supérieure 48 de l'enceinte est de préférence compris entre 0,001xD₁ et 2xD₁, plus préférentiellement comprise entre 0,1x D₁ et D₁, et de manière plus préférée comprise entre 0,15x D₁ et 0,9x D₁.

Selon l'invention, l'extrémité supérieure de l'enceinte a de préférence une forme convexe, et présente avantageusement un rapport L₅/D₁ compris entre 0,01 et 20, L₅ étant la hauteur de l'extrémité supérieure de l'enceinte. Plus préférentiellement le rapport L₅/D₁ est compris entre 0,02 et 10, et encore plus préférentiellement est compris entre 0,1 et 5. Par exemple le rapport L₅/D₁ est égal à 4.

La conduite de recycle 25 est de préférence cylindrique. Le diamètre D₂ de la conduite de recycle est de préférence compris entre 0,1 m et 3 m, plus préférentiellement compris entre 0,3 m et 2 m. Le diamètre D₂ est de préférence fixé pour avoir une vitesse liquide dans la conduite 25 comprise entre 0,01 m/s et 80 m/s, de préférence entre 0,02 m/s et 40 m/s et de manière préférée entre 0,05 m/s et 10 m/s.

Le mélange de gaz et le liquide provenant de la zone 29 de l'enceinte du réacteur a un écoulement ascendant montré par les flèches de direction 41 et est introduit à travers les conduits 27, et éventuellement par l'espace annulaire E s'il existe, qui constituent une liaison fluidique entre la zone 29 et la zone de recycle 39. Ledit mélange peut également contenir des fines de catalyseur (usuellement de diamètre inférieur à 500 microns) ou toute autre solide dispersé, tel que des asphaltènes précipités, des particules de coke, des sulfures de métaux tels que nickel, vanadium, fer, molybdène.

Dans la zone de recycle 39, il existe un niveau (non représenté) qui sépare une partie supérieure de la zone 39 contenant majoritairement le gaz séparé, d'une partie inférieure contenant majoritairement le liquide recyclé. La sortie des conduits 27 se situe généralement au-dessus de ce niveau. Le liquide séparé issu du conduit 27 s'écoule vers le bas par l'intermédiaire de la partie inférieure 43a de la coupelle de recycle, et est collecté par la conduite de recycle centrale, pour être de préférence repris par la pompe de recycle 20 .

La majeure partie du liquide ainsi séparé 31 est donc recyclée vers l'extrémité inférieure de l'enceinte du réacteur par l'intermédiaire de la conduite de recycle 25, avec des moyens de recirculation, de préférence comportant la pompe d'ébullition 20. Plus précisément, le liquide recyclé est envoyé par les moyens de recirculation, dans l'extrémité 49 de l'enceinte, en dessous de la grille de distribution 18. Le gaz 40a, qui peut être accompagné d'une partie de liquide non séparé, est évacué de l'enceinte du réacteur à travers le conduit 40. Le conduit 40 peut comprendre des fentes à son extrémité ouverte dans l'enceinte du réacteur en son extrémité inférieure qui peuvent permettre de de fixer la hauteur de l'interface liquide-gaz.

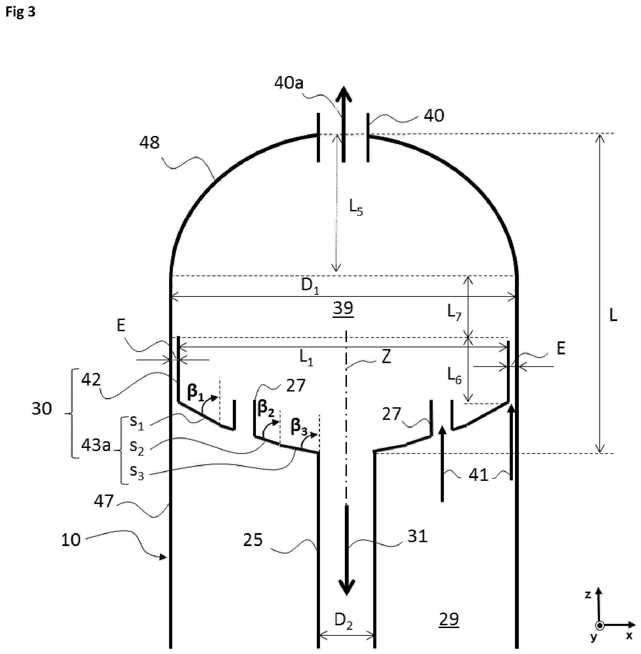

La figure 3 illustre un deuxième mode de réalisation du réacteur selon l'invention, dans lequel la coupelle de recycle 30 comporte une partie inférieure 43b formée par une succession de portions tronconiques (s1, s2, s3). Ce deuxième mode de réalisation est en tout point identique au premier mode de réalisation, décrit en relation avec la figure 2, à l'exception de ladite partie inférieure. Selon ce deuxième mode de réalisation, la partie inférieure 43b comprend, et de préférence est formée par, une succession de portions tronconiques sₚ, d'angle d'inclinaison βₚ par rapport à l'axe Z. L'angle βₚ de deux portions tronconiques successives est différent. Pour chaque portion tronconique, le sommet du cône est dirigé vers le bas, c'est-à-dire dirigé vers la conduite de recycle 25 au fond de la partie inférieure 43b. La section de la partie inférieure 43b est ainsi bien décroissante et d'angle d'inclinaison variable.

Bien que l'angle d'inclinaison βₚ d'une deuxième portion tronconique située directement sous une première portion tronconique, dans le sens de l'écoulement descendant du liquide dans la coupelle, puisse être inférieur à celui de la première portion tronconique, l'angle d'inclinaison βₚ est de préférence croissant en direction de la conduite de recycle 25. Par exemple la partie inférieure est une succession de trois portions tronconiques d'angles d'inclinaison respectifs β₁, β₂ et β₃ par rapport à l'axe de révolution Z tel qu'illustré à la figure 3. L'angle de chaque portion tronconique est d'autant plus grand que la portion est proche du fond de la partie inférieure, c'est-à-dire qu'il est croissant dans le sens de l'écoulement descendant du liquide dans la coupelle, autrement dit en direction de la conduite de recycle 25.

Le nombre de portions tronconiques Ns peut être compris entre 2 et 30, de préférence entre 2 et 10, et de manière préférée entre 2 et 5, et de manière encore plus préférée entre 3 et 5.

Lorsque Ns est suffisamment grand, par exemple supérieur à 10, la partie inférieure s'approche d'une configuration d'une partie bombée.

L'angle d'inclinaison βₚ d'une portion tronconique sₚ , l'indice p allant de 2 à Ns, est compris de manière avantageuse entre 5° et 70°, de préférence compris entre 15° et 60°, de manière très préférée compris entre 30° et 50°.

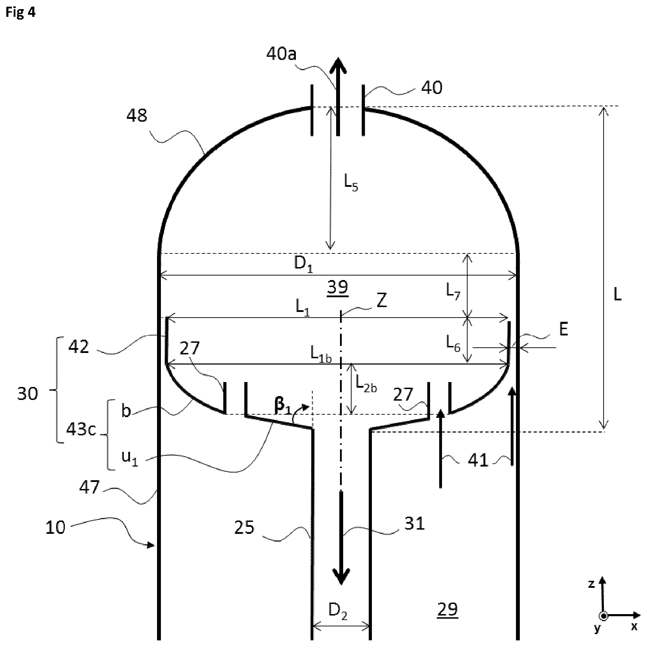

La figure 4 illustre un troisième mode de réalisation du réacteur selon l'invention, dans lequel la coupelle de recycle 30 comporte une partie inférieure 43c comportant au moins une portion tronconique de sommet de cône dirigée vers le bas et au moins une portion bombée, ladite portion tronconique étant de préférence surmontée par ladite portion bombée. De préférence, la partie inférieure 43c comprend une seule portion bombée b surmontant la portion tronconique u1 comportant la conduite de recycle 25, tel qu'illustré à la figure 4. Cette configuration, sans angle abrupt à la jonction entre la partie supérieure cylindrique et la partie inférieure de la coupelle, permet notamment d'éviter des points propice à la sédimentation de particules solides à proximité de la paroi de la partie supérieure de la coupelle. Dans ce cas, L_{1b} est égal à L₁, L_{1b} étant le plus grand diamètre de la portion bombée b de ladite partie inférieure à section décroissante et d'angle d'inclinaison variable et L₁ étant le diamètre de la partie supérieure cylindrique de la coupelle de recycle. Cependant la configuration inverse (non représentée) est également possible, selon laquelle la portion bombée est surmontée par la portion tronconique. Dans ce dernier cas, le rapport L_{1b}/L₁ peut être compris entre 0,1 et 1, de préférence entre 0,2 et 1, et plus préférentiellement entre 0,5 et 1.

Selon ce mode de réalisation la portion tronconique u₁ peut avoir un angle d'inclinaison β₁ par rapport à la l'axe de révolution Z, qui peut être compris entre 5° et 70°, de préférence compris entre 15° et 60°, et de manière très préférée compris entre 30° et 50°. Alternativement, la portion bombée est surmontée par une succession de portions tronconiques similaire à celle décrite pour le deuxième mode de réalisation de l'invention en relation avec la figure 3, sans nul besoin d'en reprendre la description ici.

La portion bombée b est de même type que celle décrite pour le premier mode de réalisation et sa description n'est également pas répétée ici, à l'exception que la hauteur L_{2b} de la portion bombée b ne constitue pas toute la hauteur de la partie inférieure 43c mais seulement une partie de celle-ci, l'autre partie étant celle constituée par la hauteur de la ou des portions tronconiques. La portion bombée b peut ainsi être caractérisée par un rapport L_{2b}/L_{1b} compris entre 0,01 et 0,7, de préférence compris entre 0,02 et 0,6, et plus préférentiellement compris entre 0,1 et 0,5, L_{2b} étant la hauteur de la portion bombée b et L_{1b} étant le plus grand diamètre de la portion bombée de ladite partie inférieure à section décroissante et d'angle d'inclinaison variable. Dans le cas d'une configuration comme celle illustrée à la figure 4, avec une seule portion bombée b surmontant la portion tronconique u₁, L_{1b} est égal à L₁. Par exemple le rapport L_{2b}/L_{1b} est égal à 0,25.

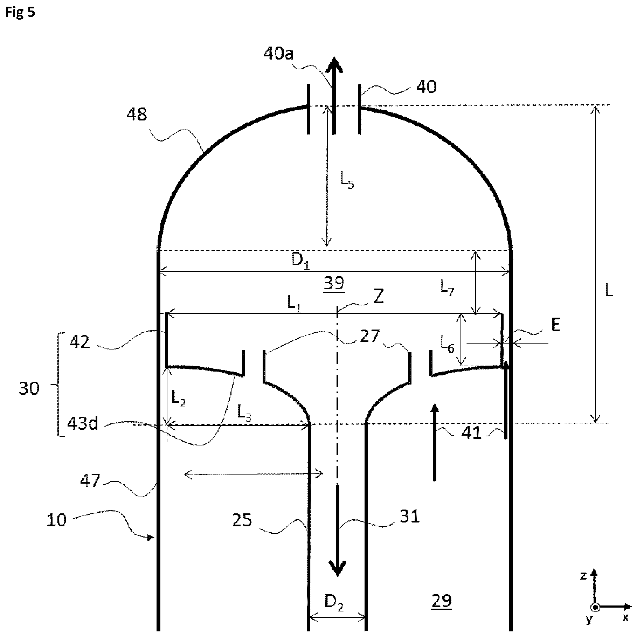

La figure 5 illustre un quatrième mode de réalisation du réacteur selon l'invention, dans lequel la coupelle de recycle 30 comporte une partie inférieure 43d avec une restriction elliptique inversée entre la partie supérieure cylindrique 42 de la coupelle et l'entrée de la conduite de recycle 25. La restriction elliptique de chaque côté de la conduite 25 est définie par le rapport L₂/L₃ où L₂ est la distance verticale entre le bas de la partie supérieure cylindrique 42 et la partie supérieure de la conduite 25 et L₃ est la distance horizontale entre la paroi de la partie supérieure cylindrique 42 et la paroi extérieure de la conduite 25. L₂/L₃ est de préférence compris entre 0,01 et 0,7, plus préférentiellement compris entre 0,02 et 0,6, et encore plus préférentiellement compris entre 0,1 et 0,5. L'avantage de ce mode de réalisation est que la restriction elliptique entre le bas de la partie supérieure cylindrique 42 et l'entrée de la conduite 25 permet au liquide recyclé d'accélérer plus rapidement dans cette zone de transition par rapport aux autres configurations et permet ainsi de diminuer les potentielles zones de dépôt de solides.

Selon ce quatrième mode de réalisation, l'angle β, pouvant être défini comme à la figure 2 comme l'angle formé entre la tangente en un point de la partie inférieure 43d et la verticale en ce point, décroît de préférence dans le sens d'écoulement (descendant) du liquide, soit en direction de la conduite de recycle 25.

La présente invention porte aussi sur un procédé d'hydroconversion d'une charge d'hydrocarbures comportant un réacteur selon invention. Il peut par exemple d'agir d'un procédé d'hydroconversion d'une charge liquide d'hydrocarbures, ou d'une charge solide d'hydrocarbures, e.g. du charbon.

Selon une mise en œuvre, la présente invention porte sur un procédé d'hydroconversion d'une charge liquide d'hydrocarbures, de préférence une charge liquide lourde, comportant un réacteur selon invention, dans lequel :
- on introduit de l'hydrogène et la charge liquide d'hydrocarbures dans l'extrémité inférieure 49 de l'enceinte du réacteur selon un flux ascendant suffisant pour produire un mouvement aléatoire d'un catalyseur sous forme de particules dans la zone de réaction catalytique 22 ;
- on maintient le catalyseur en lit bouillonnant dans la zone de réaction catalytique 22 avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle 25, pour réaliser les réactions chimiques de la charge d'hydrocarbures avec l'hydrogène ;
- on sépare une phase gaz d'une phase liquide d'un mélange provenant de la zone de réaction catalytique et envoyé dans les conduits 27 de la coupelle de recycle 30, une partie du liquide ainsi séparé constituant le liquide recyclé envoyé dans l'extrémité inférieure de l'enceinte du réacteur ; et
- on évacue du réacteur le gaz et l'autre partie du liquide séparé présents dans la zone de recycle 39.

Le procédé a été déjà décrit en partie plus haut en relation avec la figure 1.

De préférence, les conditions opératoires du réacteur sont les suivantes :
- une pression absolue comprise entre 2 MPa et 35 MPa, de préférence entre 5 MPa et 25 MPa, et de manière encore préférée, entre 6 MPa et 20 MPa, et
- une température comprise entre 300°C et 550°C, de préférence comprise entre 350 et 500°C, et d'une manière encore préférée comprise entre 370 et 460°C, la plage de température privilégiée se situant entre 380°C et 440°C.

La charge est de préférence une charge lourde d'hydrocarbures contenant une fraction d'au moins 50% poids ayant une température d'ébullition d'au moins 300°C, de préférence d'au moins 350°C, et de manière encore plus préférée d'au moins 375°C.

Cette charge lourde d'hydrocarbures peut être un pétrole brut, ou provenir du raffinage d'un pétrole brut ou du traitement d'une autre source hydrocarbonée dans une raffinerie.

De préférence, la charge est un pétrole brut ou est constituée de résidus atmosphériques et/ou de résidus sous vide issus de la distillation atmosphérique et/ou sous vide d'un pétrole brut.

La charge lourde d'hydrocarbures peut aussi être constituée de résidus atmosphérique et/ou sous vide issus de la distillation atmosphérique et/ou sous vide d'effluents provenant d'unités de conversion thermique, d'hydrotraitement, d'hydrocraquage et/ou d'hydroconversion.

De manière préférée, la charge est constituée de résidus sous vide. Ces résidus sous vide contiennent généralement une fraction d'au moins 50% poids ayant une température d'ébullition d'au moins d'au moins 450°C, et le plus souvent d'au moins 500°C, voire d'au moins 540°C. Les résidus sous vide peuvent venir directement du pétrole brut, soit d'autres unités de raffinage, telles que, entre autres, l'hydrotraitement des résidus, l'hydrocraquage de résidus, et la viscoréduction de résidus. De préférence, les résidus sous vide sont des résidus sous vide issus de la colonne de la distillation sous vide du fractionnement primaire du brut (dit "straight run" selon la terminologie anglo-saxonne).

La charge peut encore être constituée de distillats sous vide, provenant soit directement du pétrole brut, soit de coupes provenant d'autres unités de raffinage, telles que, entre autres, des unités de craquage, comme le craquage catalytique en lit fluide FCC (pour « Fluid Catalytic Cracking » en anglais) et l'hydrocraquage, et d'unités de conversion thermique, comme les unités de cokéfaction ou les unités de viscoréduction.

Elle peut aussi être constituée de coupes aromatiques extraites d'une unité de production de lubrifiants, d'huiles désasphaltées issues d'une unité de désasphaltage (raffinats de l'unité de désasphaltage), d'asphaltes issus d'une unité de désasphaltage (résidus de l'unité de désasphaltage).

La charge lourde d'hydrocarbures peut également être une fraction résiduelle issue de la liquéfaction directe de charbon (un résidu atmosphérique et/ou un résidu sous vide issu par exemple du procédé H-Coal^{™}), un distillat sous vide issu de la liquéfaction directe de charbon, comme par exemple le procédé H-Coal^{™}, ou encore une fraction résiduelle issue de la liquéfaction directe de la biomasse lignocellulosique seule ou en mélange avec du charbon et/ou une fraction pétrolière.

Toutes ces charges peuvent être utilisées pour constituer la charge lourde d'hydrocarbures traitée selon l'invention, seules ou en mélange.

La charge lourde d'hydrocarbures contient des impuretés, comme des métaux, du soufre, de l'azote, du carbone de Conradson. Elle peut aussi contenir des insolubles à l'heptane, également appelée asphaltènes C7. Les teneurs en métaux peuvent être supérieures ou égales à 20 ppm poids, de préférence supérieures ou égales à 100 ppm poids. La teneur en soufre peut être supérieure ou égale à 0,1%, voire supérieure ou égale à 1%, et peut être supérieure ou égale à 2% poids. Le taux d'asphaltènes C7 (composés insolubles à l'heptane selon la norme NFT60-115 ou la norme ASTM D 6560) s'élève au minimum à 1% et est souvent supérieur ou égal à 3% poids. Les asphaltènes C₇ sont des composés connus pour inhiber la conversion de coupes résiduelles, à la fois par leur aptitude à former des résidus hydrocarbonés lourds, communément appelés coke, et par leur tendance à produire des sédiments qui limitent fortement l'opérabilité des unités d'hydrotraitement et d'hydroconversion. La teneur en carbone Conradson peut être supérieure ou égale à 0,5%, voire d'au moins 5% poids. La teneur en carbone Conradson est définie par la norme ASTM D 482 et représente pour l'homme du métier une évaluation bien connue de la quantité de résidus de carbone produit après une pyrolyse sous des conditions standards de température et de pression.

Plusieurs réacteurs selon l'invention peuvent être opérés en série ou en parallèle, ou avec des d'autres réacteurs triphasiques selon l'art antérieur.

Avantageusement deux étapes d'hydroconversion successives sont réalisées, avec optionnellement une étape de séparation entre les étapes d'hydroconversion, chaque étape d'hydroconversion pouvant mettre en œuvre un ou plusieurs réacteurs triphasiques fonctionnant en lit bouillonnant selon l'invention. Une étape de fractionnement d'au moins une partie de l'effluent hydroconverti issu de la dernière étape d'hydroconversion est généralement réalisé, dans l'objectif de séparer les effluents à différents points de coupe et avantageusement d'obtenir au moins une fraction liquide lourde appelée résidu sous vide non converti bouillant majoritairement à une température supérieure à 300°C, de préférence supérieure à 500°C et de manière préférée supérieure à 540°C.

Ces étapes sont avantageusement réalisées en mettant en œuvre au moins un réacteur selon l'invention, et peuvent mettre en œuvre d'autres dispositifs et dans des conditions opératoires du procédé H-Oil^{™} décrites par exemple dans les brevets US4521295 ou US4495060 ou US4457831 ou dans l'article Aiche, March 19-23, 1995, Houston, Texas, paper number 46d, "Second generation ebullated bed technology".

Le procédé H-Oil^{™} est un procédé d'hydroconversion de coupes hydrocarbonées lourdes, de type gazole sous vide (« vacuum gas oil » ou VGO en anglais) ou résidus, qui met donc en présence la phase hydrocarbure liquide, la phase gaz hydrogène dispersée sous forme de bulles, et le catalyseur lui-même dispersé sous forme de particules d'une taille typiquement comprise entre 0,2 mm et 2 mm.

Le réacteur d'hydroconversion est opéré en lit fluidisé triphasique, également appelé lit bouillonnant, comme déjà décrit plus haut. Le réacteur comporte avantageusement une pompe de recirculation permettant le maintien du catalyseur en lit bouillonnant par recyclage continu d'au moins une partie d'une fraction liquide soutirée à l'extrémité supérieure du réacteur et réinjectée à l'extrémité inférieure du réacteur.

Le taux de recyclage liquide, caractéristique importants du réacteur utilisé dans un procédé de type de type H-Oil^{™}, et défini comme le rapport du débit liquide recyclé sur le débit de charge liquide entrant, est généralement compris entre 1 à 10.

Le catalyseur d'hydroconversion utilisé dans les étapes d'hydroconversion du procédé selon l'invention contient un ou plusieurs éléments des groupes 4 à 12 du tableau périodique des éléments, qui peuvent être déposés sur un support. On peut avantageusement utiliser un catalyseur comprenant un support, de préférence amorphe, tels que de la silice, de l'alumine, de la silice-alumine, du dioxyde de titane ou des combinaisons de ces structures, et de manière très préférée de l'alumine, et au moins un métal du groupe VIII choisi parmi le nickel et le cobalt et de préférence le nickel, ledit élément du groupe VIII étant de préférence utilisé en association avec au moins un métal du groupe VIB choisi parmi le molybdène et le tungstène et de préférence, le métal du groupe VIB est le molybdène.

Le catalyseur d'hydroconversion peut être un catalyseur comprenant un support alumine et au moins un métal du groupe VIII choisi parmi le nickel et le cobalt, de préférence le nickel, ledit élément du groupe VIII étant utilisé en association avec au moins un métal du groupe VIB choisi parmi le molybdène et le tungstène, de préférence, le métal du groupe VIB est le molybdène. De préférence, le catalyseur d'hydroconversion comprend le nickel en tant qu'élément du groupe VIII et le molybdène en tant qu'élément du groupe VIB. La teneur en nickel est avantageusement comprise entre 0,5 à 10 % exprimée en poids d'oxyde de nickel (NiO) et de préférence entre 1 à 6 % poids, et la teneur en molybdène est avantageusement comprise entre 1 et 30 % exprimée en poids de trioxyde de molybdène (MoO₃) et de préférence entre 4 et 20 % poids. Ce catalyseur est avantageusement utilisé sous forme d'extrudés ou de billes.

La présente invention n'exclut pas la mise en œuvre, en plus du catalyseur supporté, d'un catalyseur entraîné (dit "slurry" selon la terminologie anglo-saxonne) qui entre dans le réacteur avec la charge et qui est entraîné en dehors du réacteur avec les effluents. Il est parfois fait référence à un fonctionnement en lit hybride pour désigner le fonctionnement d'un tel réacteur mettant en œuvre des catalyseurs de granulométrie très différentes, comportant simultanément au moins un catalyseur qui est maintenu dans le réacteur en lit bouillonnant et au moins un catalyseur entrainé.

Selon une autre mise en œuvre, la présente invention porte sur un procédé d'hydroconversion d'une charge solide d'hydrocarbures, e.g. du charbon, comportant un réacteur selon invention, dans lequel :
- on introduit de l'hydrogène et un mélange de la charge solide d'hydrocarbures et d'une charge liquide d'hydrocarbures dans l'extrémité inférieure 49 de l'enceinte du réacteur selon un flux ascendant suffisant pour produire un mouvement aléatoire d'un catalyseur sous forme de particules dans la zone de réaction catalytique 22 ;
- on maintient le catalyseur en lit bouillonnant dans la zone de réaction catalytique 22 avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle 25, pour réaliser les réactions d'hydroconversion de la charge solide d'hydrocarbures ;
- on sépare une phase gaz d'une phase liquide d'un mélange provenant de la zone de réaction catalytique et envoyé dans les conduits (27) de la coupelle de recycle (30), une partie du liquide ainsi séparé constituant le liquide recyclé envoyé dans l'extrémité inférieure de l'enceinte du réacteur ; et
- on évacue du réacteur au moins le gaz et l'autre partie du liquide séparé présents dans la zone de recycle 39.

### Exemples

Les exemples ci-après montrent certains des avantages de l'invention dans le cadre d'une mise en œuvre de l'invention pour l'hydroconversion de charges d'hydrocarbures lourdes selon un procédé de type H-Oil^{™}, notamment les gains en termes de rapport volume catalytique/volume thermique, de performances d'hydroconversion et une baisse de la teneur en sédiments des effluents.

### Exemple 1 : Ratio volume catalytique/volume thermique

Dans ce premier exemple, il est comparé la mise en œuvre d'un réacteur selon l'art antérieur comportant une coupelle de recycle d'angle d'inclinaison de 45° (réacteur A) et d'exemples de réacteurs selon l'invention comportant une coupelle de recycle selon les premier, deuxième et troisième mode de réalisation décrits plus haut (réacteurs B, C et D respectivement), pour l'hydroconversion d'une charge lourde.

Le tableau 1 ci-dessous présente les principales caractéristiques géométriques des réacteurs simulés, ainsi que les performances calculées en termes de ratio volume catalytique/volume thermique. Les paramètres géométriques des réacteurs sont identiques à l'exception de l'angle d'inclinaison de la partie inférieure tronconique de la coupelle de recycle. Le taux d'expansion du catalyseur est identique dans les quatre réacteurs.

**Tableau 1**

| | Réacteur A (art antérieur) | Réacteur B (selon l'invention) | Réacteur C (selon l'invention) | Réacteur D (selon l'invention) |
|---|---|---|---|---|
| **Diamètre D₁ (m)** | 4,9 | 4,9 | 4,9 | 4,9 |
| **Diamètre D₂ (m)** | 0,8 | 0,8 | 0,8 | 0,8 |
| **Angle β** | 45° | - | - | - |
| **Angle β1** | | - | 45° | 75° |
| **Angle β2** | | - | 60° | - |
| **Angle β3** | | - | 75° | - |
| **L2/L1** | | 0,25 | | 0,25 |
| **Gain de hauteur du lit catalytique 22 (m)** | - | 0,83 | 0,69 | 1,04 |
| **Volume catalytique 22** | 532,5 m³ | 547,6 m³ | 545,1 m³ | 551,5 m³ |
| **Volume thermique (sans catalyseur)** | 123,8 m³ | 108,7 m³ | 111,2 m³ | 104,8 m³ |
| **Ratio volume lit catalytique/volume thermique** | 4,3 | 5,0 | 4,9 | 5,3 |

Cet exemple montre un gain de volume catalytique et une baisse du volume thermique dans les cas des réacteurs B, C et D (selon l'invention) comparativement au réacteur A. Le ratio volume catalytique/volume thermique est donc significativement augmenté dans le cas des réacteurs B, C et D (17% pour le réacteur B, 14% pour le réacteur C, et 22% pour le réacteur D).

Dans le cas du réacteur C, le gain en volume catalytique est lié au fait que la diminution de la longueur L permet d'augmenter la hauteur du lit catalytique.

### Exemple 2 : Teneur en sédiments et autres performances d'hydroconversion

Ce deuxième exemple vise à montrer l'impact pour l'hydroconversion d'une charge lourde d'un gain en ratio volume catalytique/volume thermique, permis par ailleurs par la mise en œuvre d'un exemple de réacteurs selon l'invention (réacteur B, C et D) comme montré à l'exemple 1, notamment sur la teneur en sédiments des effluents produits et sur certaines performances d'hydroconversion (conversion de la charge et teneur en asphaltènes dans les effluents).

Dans ce deuxième exemple, une charge lourde d'hydrocarbures, dont les caractéristiques principales sont données dans le tableau 2 ci-dessous, est envoyée dans un procédé d'hydroconversion mettant en œuvre deux réacteurs triphasiques en série en présence d'hydrogène, selon les conditions opératoires données dans le tableau 3 plus bas.

Dans cet exemple, il ne s'agit pas de tester un exemple de réacteur selon l'invention, mais de tester un réacteur présentant un ratio volume catalytique/volume thermique différent.

Dans un premier cas testé (Cas 1), les deux réacteurs triphasiques en série, sans coupelle de recycle, ont un ratio égal à 0,64
Dans un deuxième cas testé (Cas 2), les deux réacteurs triphasiques en série, sans coupelle de recycle, ont un ratio volume catalytique / volume thermique égal à 1,1.

Le taux d'expansion du catalyseur est de 40% pour les deux cas.

On rappelle que ce deuxième exemple permet de montrer l'impact d'un gain de ratio volume catalytique / volume thermique, ce qui peut être fait sans avoir à mettre en œuvre directement le réacteur selon l'invention, mais plus simplement en mettant en œuvre un réacteur classique, sans coupelle de recycle, présentant un ratio volume catalytique / volume thermique plus grand

**Tableau 2**

| **Charge** | | **Résidu sous Vide (RSV)** |
|---|---|---|
| **Teneur en 540°C+** | %poids | 82 |
| **Densité** | | 1,024 |
| **Nickel + Vanadium** | ppm poids | 217,5 |
| **Soufre** | %poids | 4,89 |
| **AsC₇** | %poids | 12,6 |
| **Conradson Carbon (CCR)** | %poids | 21,6 |
| **IP-375** | %poids | < 0,01 |

**Tableau 3**

| **Conditions opératoires et performances obtenues** | | **Cas 1** | **Cas 2** |
|---|---|---|---|
| **VVH réacteur** | h⁻¹ | 0,2 | 0,2 |
| **P totale** | MPa | 16 | 16 |
| **Température** | °C | 420 | 420 |
| **Volume catalytique / Volume thermique** | - | 0,64 | 1,1 |
| **Age catalyseur** | bbl/lb | 0,6 | 0,6 |
| **HDC540°C+** | %poids | 77 | 76 |
| **HDS** | %poids | 83 | 86 |
| **HDM** | %poids | 92 | 94 |
| **HDAsC₇** | %poids | 74 | 83 |
| **HDCCR** | %poids | 69 | 76 |
| **Sédiments de coupe effluente 350°C+ (mesurés par IP-375)** | %poids | 0,82 | 0,13 |

La comparaison entre ces deux cas démontre l'effet bénéfique de l'augmentation du volume catalytique par rapport au volume thermique (passage d'un ratio volume catalytique/volume thermique de 0,64 sur le cas 1 à 1,1 sur le cas 2) sur les performances d'hydrotraitement et notamment un des effets les plus importants porte sur la stabilité des coupes lourdes liquides effluentes, quantifiée par les sédiments selon la méthode IP-375. On note que l'hydroconversion des asphaltènes C₇, qui sont des composés insolubles à l'heptane selon la norme NFT60-115 ou la norme ASTM D 6560 (HDAsC7), est également plus importants dans le Cas 2, les performances d'hydroconversion de la charge (HDC540+ : fraction bouillant à une température supérieure ou égale à 540°C, qui est la fraction non convertie) étant aussi importantes dans le Cas 2 que dans le Cas 1.

## Revendications

1. Réacteur triphasique pour la réaction d'une charge d'hydrocarbures avec de l'hydrogène, comprenant :
- une enceinte (10) allongée et disposée verticalement comportant des extrémités supérieure (48) et inférieure (49) et une paroi latérale (47), ladite enceinte comprenant une zone de réaction catalytique (22) adjacente à l'extrémité inférieure (49) et adaptée à la réaction de la charge d'hydrocarbures et d'un gaz en présence d'un catalyseur en lit bouillonnant, et une zone de recycle d'un liquide (39) adjacente à l'extrémité supérieure (48),
- un dispositif de séparation gaz/liquide configuré pour séparer une phase gazeuse et une phase liquide d'un mélange provenant de ladite zone de réaction catalytique (22), et comprenant au moins :
-- une coupelle de recycle (30) comportant une partie supérieure cylindrique (42) prolongée par une partie inférieure (43) munie de conduits verticaux (27) pour le passage dudit mélange à travers la coupelle de recycle et la séparation gaz/liquide dudit mélange, ladite partie inférieure (43a, 43b, 43c, 43d) ayant une section décroissante et un angle d'inclinaison β variable par rapport à l'axe de révolution (Z) de ladite partie supérieure cylindrique (42), ladite coupelle de recycle (30) étant positionnée au-dessus de de la zone de réaction catalytique (22) et délimitant avec au moins l'extrémité supérieure (48) de l'enceinte la zone de recycle (39),
-- une conduite de recycle (25) du liquide située à l'apex de ladite partie inférieure (43) et en communication fluidique avec l'extrémité inférieure (49) de l'enceinte par des moyens de recirculation,
ladite section décroissante de ladite partie inférieure (43a, 43b, 43c, 43d) étant une section transversale, c'est-à-dire orthogonale par rapport l'axe de révolution (Z), qui décroît en direction de ladite conduite de recycle (25), et ledit angle d'inclinaison β variable étant un angle formé entre la tangente en un point de ladite partie inférieure (43a, 43b, 43c, 43d) et un axe parallèle à l'axe de révolution (Z) passant par ce point, ledit angle d'inclinaison β n'étant pas constant sur toute la hauteur de ladite partie inférieure (43a, 43b, 43c, 43d), excluant une partie inférieure conique ou tronconique.

2. Réacteur selon la revendication 1, dans lequel ladite partie inférieure à section décroissante et d'angle d'inclinaison variable (43b, 43c, 43d) comprend une portion bombée (43b, b, 43d), de préférence de section elliptique.

3. Réacteur selon la revendication 2, dans lequel ladite partie inférieure à section décroissante et d'angle d'inclinaison variable (43b, 43c, 43d) est une portion bombée de hauteur L₂ ayant un rapport L₂/L₁ compris entre 0,01 et 0,7, de préférence compris entre 0,02 et 0,6, et plus préférentiellement compris entre 0,1 et 0,5, L₁ étant le diamètre de la partie supérieure cylindrique (42) de la coupelle de recycle.

4. Réacteur selon la revendication 2, dans lequel ladite partie inférieure à section décroissante et d'angle d'inclinaison variable (43c) comporte en outre au moins une portion tronconique (u₁), de préférence surmontée par ladite portion bombée (b), la portion bombée (b) de ladite partie inférieure à section décroissante et d'angle d'inclinaison variable (43c) ayant un rapport L_{2b}/L_{1b} compris entre 0,01 et 0,7, de préférence compris entre 0,02 et 0,6, et plus préférentiellement compris entre 0,1 et 0,5, L_{2b} étant la hauteur de la portion bombée (b) et L_{1b} étant le plus grand diamètre de ladite partie inférieure à section décroissante et d'angle d'inclinaison variable.

5. Réacteur selon la revendication 1, dans lequel ladite partie inférieure à section décroissante et d'angle d'inclinaison variable (43a) comprend une succession de portions tronconiques (s₁, s₂, s₃), chacune desdites portions tronconiques ayant de préférence un angle d'inclinaison β croissant (β₁, β₂, β₃ ) en direction de la conduite de recycle (25).

6. Réacteur selon la revendication 1, dans lequel ladite partie inférieure à section décroissante et d'angle d'inclinaison variable (43a) comprend une restriction elliptique inversée entre la partie supérieure cylindrique (42) et la conduite de recycle (25), le rapport L₂/L₃ de la restriction elliptique étant de préférence compris entre 0,01 et 0,7, de préférence compris entre 0,02 et 0,6, et plus préférentiellement compris entre 0,1 et 0,5, L₂ étant la distance verticale entre le bas de la partie supérieure cylindrique( 42) et la partie supérieure de la conduite (25) et L₃ étant la distance horizontale entre la partie supérieure cylindrique (42) et la paroi extérieure de la conduite (25).

7. Réacteur selon l'une quelconque des revendications précédentes, dans lequel l'extrémité supérieure (48) de l'enceinte a une forme convexe et a un rapport L₅/D₁ compris entre 0,01 et 20, de préférence compris entre 0,02 et 10, et plus préférentiellement compris entre 0,1 et 5, L₅ étant la hauteur de l'extrémité supérieure de forme convexe de l'enceinte et D₁ étant le diamètre de l'enceinte du réacteur dans la zone de recycle.

8. Réacteur selon l'une quelconque des revendications précédentes, dans lequel la partie supérieure cylindrique (42) de la coupelle de recycle (30) est formée par la paroi latérale (47) de l'enceinte.

9. Réacteur selon l'un quelconque des revendications 1 à 6, dans lequel un espace annulaire (E) est formé entre la partie supérieure cylindrique (42) de la coupelle de recycle (30) et la paroi latérale (47) de l'enceinte, ledit espace annulaire(E) ayant de préférence une largeur comprise entre 0,01 et D₁/3 m.

10. Réacteur selon l'une quelconque des revendications précédentes, dans lequel la hauteur L₆ de la partie supérieure cylindrique (42) est comprise entre 0,01xD₁ et 2xD₁.

11. Réacteur selon l'une quelconque des revendications précédentes, dans lequel la distance L₇ entre le sommet de la partie supérieure cylindrique (42) de la coupelle de recycle (30) et le bas de l'extrémité supérieure (48) de l'enceinte est compris entre 0,001xD₁ et 2xD₁.

12. Procédé d'hydroconversion d'une charge d'hydrocarbures comportant un réacteur selon l'une quelconques des revendications précédentes.

13. Procédé d'hydroconversion d'une charge liquide d'hydrocarbures, de préférence une charge liquide lourde d'hydrocarbures, selon la revendication 12, dans lequel :
- on introduit de l'hydrogène et la charge liquide d'hydrocarbures dans l'extrémité inférieure (49) de l'enceinte du réacteur selon un flux ascendant suffisant pour produire un mouvement aléatoire d'un catalyseur sous forme de particules dans la zone de réaction catalytique (22) ;
- on maintient le catalyseur en lit bouillonnant dans la zone de réaction catalytique (22) avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle (25), pour réaliser les réactions d'hydroconversion de ladite charge d'hydrocarbures ;
- on sépare une phase gaz d'une phase liquide d'un mélange provenant de la zone de réaction catalytique et envoyé dans les conduits (27) de la coupelle de recycle (30), une partie du liquide ainsi séparé constituant le liquide recyclé envoyé dans l'extrémité inférieure de l'enceinte du réacteur ; et
- on évacue du réacteur le gaz et l'autre partie du liquide séparé présents dans la zone de recycle (39),
et dans lequel les conditions opératoires dudit réacteur sont les suivantes :
- une pression absolue comprise entre 2 et 35 MPa, de préférence entre 5 et 25 MPa, et de manière encore préférée, entre 6 et 20 MPa, et
- une température comprise entre 300°C et 550°C, de préférence comprise entre 350 et 500°C, plus préférentiellement comprise entre 370 et 460°C, et encore plus préférentiellement se situant entre 380°C et 440°C.

14. Procédé selon l'une quelconque des revendications 12 et 13, dans lequel la charge est une charge liquide lourde d'hydrocarbures, comportant une fraction d'au moins 50% poids ayant une température d'ébullition d'au moins 300°C, et contenant du soufre, du carbone Conradson, des métaux, et de l'azote.

15. Procédé d'hydroconversion d'une charge solide d'hydrocarbures, de préférence du charbon, selon la revendication 12, dans lequel :
- on introduit de l'hydrogène et un mélange de la charge solide d'hydrocarbures et d'une charge liquide d'hydrocarbures dans l'extrémité inférieure (49) de l'enceinte du réacteur selon un flux ascendant suffisant pour produire un mouvement aléatoire d'un catalyseur sous forme de particules dans la zone de réaction catalytique (22) ;
- on maintient le catalyseur en lit bouillonnant dans la zone de réaction catalytique (22) avec une expansion volumétrique comprise entre 10% et 100% par rapport au volume statique dudit catalyseur par l'injection de liquide recyclé, de préférence au moyen d'une pompe, issu de la zone de recycle adjacente à l'extrémité supérieure de l'enceinte par l'intermédiaire de la conduite de recycle (25), pour réaliser les réactions d'hydroconversion de la charge solide d'hydrocarbures ;
- on sépare une phase gaz d'une phase liquide d'un mélange provenant de la zone de réaction catalytique et envoyé dans les conduits (27) de la coupelle de recycle (30), une partie du liquide ainsi séparé constituant le liquide recyclé envoyé dans l'extrémité inférieure de l'enceinte du réacteur ; et
- on évacue du réacteur au moins le gaz et l'autre partie du liquide séparé présents dans la zone de recycle (39).

## Patentansprüche

1. Dreiphasen-Reaktor zur Umsetzung einer Kohlenwasserstoffcharge mit Wasserstoff, umfassend:
- einen Hohlraum (10), der länglich und vertikal angeordnet ist, wobei er ein oberes Ende (48) und ein unteres Ende (49) und eine Seitenwand (47) aufweist, wobei der Hohlraum einen katalytischen Reaktionsbereich (22), welcher an das untere Ende (49) angrenzt und sich dafür eignet, die Kohlenwasserstoffcharge und ein Gas in Gegenwart eines Katalysators in einer Wirbelschicht umzusetzen, und einen Bereich zum Rückführen einer Flüssigkeit (39) umfasst, welcher an das obere Ende (48) angrenzt,
- eine Gas/Flüssigkeits-Trennvorrichtung, die dafür ausgelegt ist, eine Gasphase und eine Flüssigphase einer Mischung aufzutrennen, welche aus dem katalytischen Reaktionsbereich (22) stammt, und die zumindest Folgendes umfasst:
-- eine Rückführungsschale (30), die einen zylindrischen oberen Abschnitt (42) aufweist, der sich in einem unteren Abschnitt (43) fortsetzt, welcher mit vertikalen Leitungen (27) versehen ist, um die Mischung durch die Schale zu leiten und die Mischung einer Gas/Flüssigkeits-Trennung zu unterziehen, wobei der untere Abschnitt (43a, 43b, 43c, 43d) ein abnehmendes Schnittprofil sowie einen Neigungswinkel β hat, der gegenüber der Drehachse (Z) des zylindrischen oberen Abschnitts (42) variabel ist, wobei die Rückführungsschale (30) oberhalb des katalytischen Reaktionsbereichs (22) angeordnet ist und zumindest mit dem oberen Ende (48) des Hohlraums den Rückführungsbereich (39) begrenzt,
-- eine Leitung (25), die zur Rückführung der Flüssigkeit dient und sich an der Spitze des unteren Abschnitts (43) befindet und über Umwälzmittel in Fluidverbindung mit dem unteren Ende (49) des Hohlraums steht,
wobei es sich bei dem abnehmenden Schnittprofil des unteren Abschnitts (43a, 43b, 43c, 43d) um ein Querschnittsprofil handelt, d.h. dass es rechtwinklig zur Drehachse (Z) ist, wobei es in Richtung der Rückführungsleitung (25) abnimmt, und wobei es sich bei dem variablen Neigungswinkel β um einen Winkel handelt, der zwischen der Tangente an einem Punkt des unteren Abschnitts (43a, 43b, 43c, 43d) und einer Achse gebildet ist, welche parallel zur Drehachse (Z) ist, die sich durch diesen Punkt erstreckt, wobei der Neigungswinkel β nicht über die gesamte Höhe des unteren Abschnitts (43a, 43b, 43c, 43d) konstant ist, sodass ein kegelförmiger oder kegelstumpfförmiger Abschnitt auszuschließen ist.

2. Reaktor nach Anspruch 1, wobei der untere Abschnitt mit abnehmendem Schnittprofil und variablem Neigungswinkel (43b, 43c, 43d) einen gewölbten Teilbereich (43b, b, 43d) umfasst, der vorzugsweise ein elliptisches Schnittprofil hat.

3. Reaktor nach Anspruch 2, wobei es sich bei dem unteren Abschnitt mit abnehmendem Schnittprofil und variablem Neigungswinkel (43b, 43c, 43d) um einen gewölbten Teilbereich mit einer Höhe L₂ handelt, wobei das Verhältnis L₂/L₁ im Bereich von 0,01 bis 0,7 liegt, vorzugsweise im Bereich von 0,02 bis 0,6 liegt und stärker bevorzugt im Bereich von 0,1 bis 0,5 liegt, wobei L₁ der Durchmesser des zylindrischen oberen Abschnitts (42) der Rückführungsschale ist.

4. Reaktor nach Anspruch 2, wobei der untere Abschnitt mit abnehmendem Schnittprofil und variablem Neigungswinkel (43c) darüber hinaus mindestens einen kegelstumpfförmigen Teilbereich (u₁) aufweist, auf welchem vorzugsweise der gewölbte Teilbereich (b) aufsitzt, wobei der gewölbte Teilbereich (b) des unteren Abschnitts mit abnehmendem Schnittprofil und variablem Neigungswinkel (43c) ein Verhältnis L_{2b}/L_{1b} hat, das im Bereich von 0,01 bis 0,7 liegt, vorzugsweise im Bereich von 0,02 bis 0,6 liegt und stärker bevorzugt im Bereich von 0,1 bis 0,5 liegt, wobei L_{2b} die Höhe des gewölbten Teilbereichs (b) ist und L_{1b} der größte Durchmesser des unteren Abschnitts mit abnehmendem Schnittprofil und variablem Neigungswinkel ist.

5. Reaktor nach Anspruch 1, wobei der untere Abschnitt mit abnehmendem Schnittprofil und variablem Neigungswinkel (43a) eine Abfolge von kegelstumpfförmigen Teilbereichen (s₁, s₂, s₃) umfasst, wobei die kegelstumpfförmigen Teilbereiche vorzugsweise jeweils Neigungswinkel β (β₁, β₂, β₃) haben, die zur Rückführungsleitung (25) hin zunehmen.

6. Reaktor nach Anspruch 1, wobei der untere Abschnitt mit abnehmendem Schnittprofil und variablem Neigungswinkel (43a) zwischen dem zylindrischen oberen Abschnitt (42) und der Rückführungsleitung (25) eine umgekehrte elliptische Beschränkung umfasst, wobei das Verhältnis L₂/L₃ der elliptischen Beschränkung vorzugsweise im Bereich von 0,01 bis 0,7 liegt, vorzugsweise im Bereich von 0,02 bis 0,6 liegt und stärker bevorzugt im Bereich von 0,1 bis 0,5 liegt, wobei L₂ der vertikale Abstand zwischen der Unterseite des zylindrischen oberen Abschnitts (42) und dem oberen Abschnitt der Leitung (25) ist und L₃ der horizontale Abstand zwischen dem zylindrischen oberen Abschnitt (42) und der Außenwand der Leitung (25) ist.

7. Reaktor nach einem beliebigen der vorhergehenden Ansprüche, wobei das obere Ende (48) des Hohlraums eine konvexe Form hat und ein Verhältnis L₅/D₁ aufweist, das im Bereich von 0,01 bis 20 liegt, vorzugsweise im Bereich von 0,02 bis 10 liegt, und stärker bevorzugt im Bereich von 0,1 bis 5 liegt, wobei L₅ die Höhe des oberen Endes der konvexen Form des Hohlraums ist und D₁ der Durchmesser des Reaktors im Rückführungsbereich ist.

8. Reaktor nach einem beliebigen der vorhergehenden Ansprüche, wobei der zylindrische obere Abschnitt (42) der Rückführungsschale (30) aus der Seitenwand (47) des Hohlraums gebildet ist.

9. Reaktor nach einem beliebigen der Ansprüche 1 bis 6, wobei ein ringförmiger Raum (E) zwischen dem zylindrischen oberen Abschnitt (42) der Rückführungsschale (30) und der Seitenwand (47) des Hohlraum ausgebildet ist, wobei der ringförmige Raum (E) vorzugsweise eine Breite im Bereich von 0,01 bis D₁/3 m hat.

10. Reaktor nach einem beliebigen der vorhergehenden Ansprüche, wobei die Höhe L₆ des zylindrischen Abschnitts (42) im Bereich von 0,01xD₁ und 2xD₁ liegt.

11. Reaktor nach einem beliebigen der vorhergehenden Ansprüche, wobei der Abstand L₇ zwischen dem höchsten Punkt des zylindrischen oberen Abschnitts (42) der Rückführungsschale (30) und der Unterseite des oberen Endes (48) des Hohlraums im Bereich von 0,001xD₁ bis 2xD₁ liegt.

12. Verfahren zur hydrierenden Umwandlung einer Kohlenwasserstoffcharge, wobei es einen Reaktor nach einem beliebigen der vorhergehenden Ansprüche aufweist.

13. Verfahren zur hydrierenden Umwandlung einer flüssigen Charge an Kohlenwasserstoffen, vorzugsweise einer schwerflüchtigen flüssigen Charge an Kohlenwasserstoffen, nach Anspruch 12, wobei :
- Wasserstoff und die flüssige Charge an Kohlenwasserstoffen in das untere Ende (49) des Hohlraums des Reaktors gemäß einem aufsteigenden Fluss eingeleitet werden, der dafür ausreicht, eine zufällige Bewegung eines partikelförmigen Katalysators in dem katalytischen Reaktionsbereich (22) zu bewirken;
- der Katalysator in dem katalytischen Reaktionsbereich (22) als Wirbelschicht aufrechterhalten wird, wobei die Volumenausdehnung gegenüber dem statischen Volumen des Katalysators im Bereich von 10% bis 100% liegt, indem zurückgeführte Flüssigkeit, die aus dem Rückführungsbereich stammt, welcher an das obere Ende des Hohlraums angrenzt, vorzugsweise mittels einer Pumpe, durch die Rückführungsleitung (25) eingeleitet wird, um die Reaktionen der hydrierenden Umwandlung der Kohlenwasserstoffcharge durchzuführen;
- eine Gasphase von einer Flüssigphase einer Mischung abgetrennt wird, die aus dem katalytischen Reaktionsbereich stammt und in die Leitungen (27) der Rückführungsschale (30) eingeleitet wird, wobei eine Teilmenge der auf diese Weise abgetrennten Flüssigkeit, welche die zurückgeführte Flüssigkeit darstellt, in das untere Ende des Hohlraums des Reaktors eingeleitet wird; und
- das Gas und die andere Teilmenge der abgetrennten Flüssigkeit, welche im Rückführungsbereich (39) vorliegen, aus dem Reaktor abgeleitet werden,
und wobei die Betriebsbedingungen des Reaktors folgendermaßen sind:
- ein Absolutdruck im Bereich von 2 bis 35 MPa, vorzugsweise von 5 bis 25 MPa und noch stärker bevorzugt von 6 bis 20 MPa, und
- eine Temperatur im Bereich von 300 °C bis 550 °C, vorzugsweise im Bereich von 350 bis 500 °C, stärker bevorzugt im Bereich von 370 bis 460 °C, wobei sie noch stärker bevorzugt im Bereich von 380 °C bis 440 °C liegt.

14. Verfahren nach einem beliebigen der Ansprüche 12 bis 13, wobei es sich bei der Charge um eine schwerflüchtige flüssige Charge an Kohlenwasserstoffen handelt, die eine Fraktion von mindestens 50 Gewichts-% aufweist, welche eine Siedetemperatur von mindestens 300 °C hat und welche Schwefel, Conradson-Kohlenstoff, Metalle und Stickstoff enthält.

15. Verfahren zur hydrierenden Umwandlung einer feststofflichen Charge an Kohlenwasserstoffen, bei der es sich vorzugsweise um Kohle handelt, nach Anspruch 12, wobei :
- Wasserstoff sowie eine Mischung aus der feststofflichen Charge an Kohlenwasserstoffen und einer flüssigen Charge an Kohlenwasserstoffen in das untere Ende (49) des Hohlraums des Reaktors gemäß einem aufsteigenden Fluss eingeleitet werden, der dafür ausreicht, eine zufällige Bewegung eines partikelförmigen Katalysators in dem katalytischen Reaktionsbereich (22) zu bewirken;
- der Katalysator in dem katalytischen Reaktionsbereich (22) als Wirbelschicht aufrechterhalten wird, wobei die Volumenausdehnung gegenüber dem statischen Volumen des Katalysators im Bereich von 10% bis 100% liegt, indem zurückgeführte Flüssigkeit, die aus dem Rückführungsbereich stammt, welcher an das obere Ende des Hohlraums angrenzt, vorzugsweise mittels einer Pumpe, durch die Rückführungsleitung (25) eingeleitet wird, um die Reaktionen der hydrierenden Umwandlung der feststofflichen Charge an Kohlenwasserstoffen durchzuführen;
- eine Gasphase von einer Flüssigphase einer Mischung abgetrennt wird, die aus dem katalytischen Reaktionsbereich stammt und in die Leitungen (27) der Rückführungsschale (30) eingeleitet wird, wobei eine Teilmenge der auf diese Weise abgetrennten Flüssigkeit, welche die zurückgeführte Flüssigkeit darstellt, in das untere Ende des Hohlraums des Reaktors eingeleitet wird; und
- zumindest das Gas und die andere Teilmenge der abgetrennten Flüssigkeit, welche im Rückführungsbereich (39) vorliegen, aus dem Reaktor abgeleitet werden.

## Claims

1. Three-phase reactor for the reaction of a hydrocarbon feedstock with hydrogen, comprising:
- a vertically positioned elongated chamber (10) comprising upper (48) and lower (49) ends and a side wall (47), said chamber comprising a catalytic reaction zone (22) adjacent to the lower end (49) and suitable for the reaction of the hydrocarbon feedstock and of a gas in the presence of an ebullating bed catalyst, and a zone for recycle of a liquid (39) adjacent to the upper end (48),
- a gas/liquid separation device configured in order to separate a gas phase and a liquid phase of a mixture originating from said catalytic reaction zone (22), and comprising at least:
-- a recycle cup (30) comprising a cylindrical upper part (42) extended by a lower part (43) which is provided with vertical pipes (27) for the passage of said mixture through the recycle cup and the gas/liquid separation of said mixture, said lower part (43a, 43b, 43c, 43d) having a decreasing section and a variable angle of inclination β with respect to the axis of revolution (Z) of said cylindrical upper part (42), said recycle cup (30) being positioned above the catalytic reaction zone (22) and delimiting, with at least the upper end (48) of the chamber, the recycle zone (39),
-- a pipe (25) for recycle of the liquid located at the apex of said lower part (43) and in fluidic communication with the lower end (49) of the chamber by recirculation means,
said decreasing section of said lower part (43a, 43b, 43c, 43d) being a transverse section, that is to say a section orthogonal with respect to the axis of revolution (Z), which decreases in the direction of said recycle pipe (25), and said variable angle of inclination β being an angle formed between the tangent at a point of said lower part (43a, 43b, 43c, 43d) and an axis parallel to the axis of revolution (Z) passing through that point, said angle of inclination β not being constant over the entire height of said lower part (43a, 43b, 43c, 43d), excluding a conical or frustoconical lower part.

2. Reactor according to Claim 1, in which said lower part having a decreasing section and of variable angle of inclination (43b, 43c, 43d) comprises a dished portion (43b, b, 43d), preferably of elliptical section.

3. Reactor according to Claim 2, in which said lower part having a decreasing section and of variable angle of inclination (43b, 43c, 43d) is a dished portion with a height L₂ having an L₂/L₁ ratio of between 0.01 and 0.7, preferably of between 0.02 and 0.6 and more preferentially of between 0.1 and 0.5, L₁ being the diameter of the cylindrical upper part (42) of the recycle cup.

4. Reactor according to Claim 2, in which said lower part having a decreasing section and of variable angle of inclination (43c) additionally comprises at least one frustoconical portion (u₁), preferably surmounted by said dished portion (b), the dished portion (b) of said lower part having a decreasing section and of variable angle of inclination (43c) having an L_{2b}/L_{1b} ratio of between 0.01 and 0.7, preferably of between 0.02 and 0.6 and more preferentially of between 0.1 and 0.5, L_{2b} being the height of the dished portion (b) and L_{1b} being the greatest diameter of said lower part having a decreasing section and of variable angle of inclination.

5. Reactor according to Claim 1, in which said lower part having a decreasing section and of variable angle of inclination (43a) comprises a succession of frustoconical portions (s₁, s₂, s₃), each one of said frustoconical portions preferably having an increasing angle of inclination β (β₁, β₂, β₃) in the direction of the recycle pipe (25).

6. Reactor according to Claim 1, in which said lower part having a decreasing section and of variable angle of inclination (43a) comprises an inverted elliptical restriction between the cylindrical upper part (42) and the recycle pipe (25), the L₂/L₃ ratio of the elliptical restriction preferably being of between 0.01 and 0.7, preferably of between 0.02 and 0.6 and more preferentially of between 0.1 and 0.5, L₂ being the vertical distance between the bottom of the cylindrical upper part (42) and the upper part of the pipe (25) and L₃ being the horizontal distance between the cylindrical upper part (42) and the external wall of the pipe (25).

7. Reactor according to any one of the preceding claims, in which the upper end (48) of the chamber has a convex shape and has an L₅/D₁ ratio of between 0.01 and 20, preferably of between 0.02 and 10 and more preferentially of between 0.1 and 5, L₅ being the height of the upper end of convex shape of the chamber and D₁ being the diameter of the chamber of the reactor in the recycle zone.

8. Reactor according to any one of the preceding claims, in which the cylindrical upper part (42) of the recycle cup (30) is formed by the side wall (47) of the chamber.

9. Reactor according to any one of Claims 1 to 6, in which an annular space (E) is formed between the cylindrical upper part (42) of the recycle cup (30) and the side wall (47) of the chamber, said annular space (E) preferably having a width of between 0.01 and D₁/3 m.

10. Reactor according to any one of the preceding claims, in which the height L₆ of the cylindrical upper part (42) is of between 0.01 x D₁ and 2 x D₁.

11. Reactor according to any one of the preceding claims, in which the distance L₇ between the vertex of the cylindrical upper part (42) of the recycle cup (30) and the bottom of the upper end (48) of the chamber is of between 0.001 x D₁ and 2 x D₁.

12. Process for the hydroconversion of a hydrocarbon feedstock comprising a reactor according to any one of the preceding claims.

13. Process for the hydroconversion of a liquid hydrocarbon feedstock, preferably a heavy liquid hydrocarbon feedstock, according to Claim 12, in which:
- hydrogen and the liquid hydrocarbon feedstock are introduced into the lower end (49) of the chamber of the reactor according to an upward stream sufficient to produce a random movement of a catalyst in the form of particles in the catalytic reaction zone (22);
- the catalyst is maintained as an ebullating bed in the catalytic reaction zone (22) with an expansion in volume of between 10% and 100%, with respect to the static volume of said catalyst, by the injection of recycled liquid, preferably by means of a pump, resulting from the recycle zone adjacent to the upper end of the chamber via the recycle pipe (25), in order to carry out the hydroconversion reactions of said hydrocarbon feedstock;
- a gas phase is separated from a liquid phase of a mixture originating from the catalytic reaction zone and sent into the pipes (27) of the recycle cup (30), a part of the liquid thus separated constituting the recycled liquid sent into the lower end of the chamber of the reactor; and
- the gas and the other part of the separated liquid present in the recycle zone (39) are discharged from the reactor,
and in which the operating conditions of said reactor are as follows:
- an absolute pressure of between 2 and 35 MPa, preferably between 5 and 25 MPa and more preferably between 6 and 20 MPa, and
- a temperature of between 300°C and 550°C, preferably of between 350°C and 500°C, more preferentially of between 370°C and 460°C and more preferentially still lying between 380°C and 440°C.

14. Process according to either one of Claims 12 and 13, in which the feedstock is a heavy liquid hydrocarbon feedstock comprising a fraction of at least 50% by weight having a boiling point of at least 300°C, and containing sulfur, Conradson carbon, metals and nitrogen.

15. Process for the hydroconversion of a solid hydrocarbon feedstock, preferably coal, according to Claim 12, in which:
- hydrogen and a mixture of the solid hydrocarbon feedstock and of a liquid hydrocarbon feedstock are introduced into the lower end (49) of the chamber of the reactor according to an upward stream sufficient to produce a random movement of a catalyst in the form of particles in the catalytic reaction zone (22);
- the catalyst is maintained as an ebullating bed in the catalytic reaction zone (22) with an expansion in volume of between 10% and 100%, with respect to the static volume of said catalyst, by the injection of recycled liquid, preferably by means of a pump, resulting from the recycle zone adjacent to the upper end of the chamber via the recycle pipe (25), in order to carry out the hydroconversion reactions of the solid hydrocarbon feedstock;
- a gas phase is separated from a liquid phase of a mixture originating from the catalytic reaction zone and sent into the pipes (27) of the recycle cup (30), a part of the liquid thus separated constituting the recycled liquid sent into the lower end of the chamber of the reactor; and
- at least the gas and the other part of the separated liquid present in the recycle zone (39) are discharged from the reactor.
